(19) Europäisches Patentamt / European Patent Office / Office européen des brevets

(11) **EP 3 910 775 A1**

(12) **DEMANDE DE BREVET EUROPEEN**

(43) Date de publication:
**17.11.2021 Bulletin 2021/46**

(51) Int Cl.:
**H02M 1/42** *(2007.01)*        **H02M 7/219** *(2006.01)*
**H02M 1/00** *(2006.01)*

(21) Numéro de dépôt: **21173699.6**

(22) Date de dépôt: **12.05.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **15.05.2020  FR 2004858**

(71) Demandeurs:
• **Commissariat à l'Energie Atomique et aux Energies Alternatives**
  **75015 Paris (FR)**

• **Renault SAS**
  **92100 Boulogne Billancourt (FR)**

(72) Inventeurs:
• **LEIRENS, Sylvain**
  **38054 Grenoble Cedex 09 (FR)**
• **MAYNARD, Xavier**
  **38054 Grenoble Cedex 09 (FR)**
• **LOUDOT, Serge**
  **91190 Villiers-le-Bâcle (FR)**

(74) Mandataire: **Cabinet Beaumont**
  **4, Place Robert Schuman**
  **B.P. 1529**
  **38025 Grenoble Cedex 1 (FR)**

(54) **COMMANDE DE CONVERTISSEUR À DÉCOUPAGE**

(57)    La présente description concerne un procédé de commande d'un convertisseur comprenant deux ponts en H (110, 120) reliés par un transformateur (130), dans lequel : deux séquences de commutations entre états sont appliquées respectivement aux deux ponts ; l'un des états d'une première des séquences correspond à un sens donné d'application d'une tension au transformateur par le pont auquel la première des séquences est appliquée ; et la première des séquences évolue au cours d'une même demi-alternance d'une tension AC (V1) aux bornes de l'un des ponts (110), en sorte que : pendant au moins une première période, des commutations d'entrée et sortie dudit l'un des états se produisent à un même état d'une deuxième des séquences ; et pendant au moins une deuxième période, des commutations d'entrée et sortie dudit l'un des états se produisent à des états différents de la deuxième des séquences.

**Fig. 1**

EP 3 910 775 A1

**Description**

Domaine technique

La présente description concerne de façon générale les dispositifs électroniques, en particulier les convertisseurs à découpage

Technique antérieure

Les convertisseurs à découpage utilisent un ou des interrupteurs mis alternativement aux états passant et bloqué à une fréquence de découpage. On utilise des convertisseurs à découpage pour fournir une tension et/ou un courant à partir d'une alimentation ayant des valeurs de tension/courant différentes des valeurs des tension/courant à fournir. Par exemple, un convertisseur à découpage de type alternatif-continu AC-DC (en anglais "Alternating current-Direct current") permet d'obtenir une tension continue à partir d'une source d'une tension alternative telle que celle d'un réseau électrique ou d'un alternateur.

Le document XP032312081 (Jauch et al.) décrit un convertisseur alternatif-continu bidirectionnel isolé, monophasé, monoétage, à détection du zéro de tension avec correction du facteur de puissance.

Le document XP033727948 (Saha et al.) décrit une conversion alternatif-continu à structure matricielle bidirectionnelle pour des transformateurs intégrés modulaires.

Le document US2011/0249472 décrit la commande en modulation de largeur d'impulsions de convertisseurs à double pont actifs.

Le document XP33347327 (Chen et al.) décrit un convertisseur alternatif-continu monoétage à pont double actif bidirectionnel basé sur des transistors GaN de puissance à enrichissement.

Résumé de l'invention

Il existe un besoin de simplifier les procédés connus de commande de convertisseur à découpage, plus précisément, de commande d'interrupteurs de convertisseur à découpage.

Il existe un besoin d'un procédé de commande d'interrupteurs de convertisseur permettant au convertisseur d'assurer une fonction de correcteur de facteur de puissance PFC (en anglais "Power Factor Corrector") améliorée par rapport aux correcteurs de facteur de puissance existants.

Un mode de réalisation pallie tout ou partie des inconvénients des procédés connus de commande de convertisseur à découpage.

Un mode de réalisation pallie tout ou partie des inconvénients des dispositifs connus de commande de convertisseur à découpage.

Un mode de réalisation pallie tout ou partie des inconvénients des convertisseurs à découpage connus.

Selon un premier aspect, un mode de réalisation prévoit un procédé de commande d'un convertisseur comprenant deux ponts en H reliés par un transformateur, dans lequel :

- des répétitions de deux séquences de commutations entre plusieurs états sont appliquées respectivement aux deux ponts ; et
- les deux séquences sont générées à partir d'une même valeur représentative d'un écart entre des instants de commutation des deux séquences :

  - pour une valeur d'un rapport entre tensions aux bornes des deux ponts supérieure à un rapport de transformation du transformateur ; et
  - pour une valeur du rapport entre les tensions inférieure au rapport de transformation.

Selon un mode de réalisation, des instants de commutation des séquences sont calculés à partir d'une consigne représentative d'une puissance à transférer entre les ponts, et les deux séquences sont générées à partir de ladite même valeur représentative pour des mêmes valeurs d'un rapport entre ladite consigne et un produit desdites tensions.

Selon un mode de réalisation :

- la consigne est calculée en fonction d'une valeur d'une tension reçue par l'un des ponts ; et
- de préférence, la tension reçue est alternative et la consigne est calculée en sorte que le convertisseur ait un fonctionnement de type PFC.

Selon un mode de réalisation, lesdits instants de commutation résultent de calculs basés sur une égalité entre :

- la puissance représentée par la consigne ; et
- une puissance calculée à partir d'un modèle du convertisseur et à partir de valeurs des tensions aux bornes des ponts.

Selon un mode de réalisation, lesdits calculs sont en outre basés sur une égalité souhaitée entre valeurs d'un courant dans le transformateur à un instant de commutation de l'une des deux séquences et à un instant de commutation de l'autre des deux séquences.

Selon un mode de réalisation, pour chacun desdits calculs, une fréquence commune auxdites répétitions est choisie préalablement au calcul.

Selon un mode de réalisation, dans chacune des séquences, des commutations d'entrée et sortie d'un état donné sont situées symétriquement par rapport à un instant de référence, les instants de référence des deux séquences présentant entre eux un écart de phase.

Selon un mode de réalisation, les séquences sont générées sur la base de valeurs dudit écart de phase souhaitées opposées pour des valeurs inverses l'une de l'autre d'un rapport entre le rapport entre tensions et le rapport de transformation.

Selon un mode de réalisation, ledit écart de phase a des signes opposés pour deux sens opposés de circulation d'énergie entre les ponts.

Selon un mode de réalisation :

- les deux séquences comprennent chacune deux cycles de commutations respectifs de deux branches du pont auquel la séquence est appliquée ;
- les cycles d'une première des deux séquences sont déphasés l'un par rapport à l'autre ; et
- les cycles d'une deuxième des deux séquences sont inverses l'un de l'autre.

Selon un mode de réalisation, les cycles des première et/ou deuxième des deux séquences ont un rapport cyclique sensiblement égal à 0,5.

Selon un mode de réalisation, les tensions dudit rapport entre tensions sont respectivement celles d'un premier des ponts et d'un deuxième des ponts, et les premier et deuxième des ponts sont commutés respectivement :

- selon les première et deuxième des deux séquences lorsque la valeur du rapport entre tensions est supérieure au rapport de transformation ; et
- selon les deuxième et première des deux séquences lorsque la valeur du rapport entre tensions est inférieure au rapport de transformation.

Selon un mode de réalisation :

- l'un des états de la première des deux séquences correspond à un sens donné d'application d'une tension au transformateur par le pont auquel la première des deux séquences est appliquée ; et
- la première des deux séquences évolue au cours d'une même demi-alternance d'une tension AC aux bornes de l'un des ponts, en sorte que :

    - pendant au moins une première période de temps, des commutations d'entrée et sortie dudit l'un des états se produisent à un même état de la deuxième des deux séquences ; et
    - pendant au moins une deuxième période de temps, des commutations d'entrée et sortie dudit l'un des états se produisent à des états différents de la deuxième des deux séquences.

Un mode de réalisation prévoit un dispositif configuré pour mettre en œuvre un procédé tel que défini ci-dessus.

Un mode de réalisation prévoit un convertisseur comprenant un dispositif tel que défini ci-dessus.

Selon un deuxième aspect, un mode de réalisation prévoit un procédé de commande d'un convertisseur comprenant deux ponts en H reliés par un transformateur, dans lequel :

- des répétitions de deux séquences de commutations entre plusieurs états sont appliquées respectivement aux deux ponts ;
- les commutations des séquences ont lieu à des instants résultant de calculs basés sur une égalité souhaitée entre valeurs d'un courant dans le transformateur à un desdits instants de l'une des deux séquences et à un desdits instants de l'autre des deux séquences ; et
- pour chacun desdits calculs, une fréquence constante, commune auxdites répétitions et identique pour les deux ponts, est choisie préalablement aux calculs.

Selon un mode de réalisation, une valeur représentative d'une durée entre lesdits instants des deux séquences est déterminée en fonction des tensions aux bornes des deux ponts, de ladite fréquence constante, d'un rapport de transformation du transformateur, d'une inductance de fuite du transformateur.

Selon un mode de réalisation, ladite valeur est choisie comme étant la plus petite solution de l'équation :

$$x = \frac{-b - \sqrt{\Delta}}{2a},$$

où :

a et b ne sont fonction que des tensions aux bornes du transformateur et dudit rapport de transformation, et $\Delta$ est en plus fonction de ladite fréquence constante, de ladite inductance de fuite et d'une valeur de puissance à transférer.

Selon un mode de réalisation, lesdits calculs sont en outre basés sur une égalité entre :

- une puissance à transférer entre les ponts par le convertisseur, représentée par une consigne ; et
- une puissance calculée à partir d'un modèle du convertisseur et de valeurs de tensions aux bornes des ponts.

Selon un mode de réalisation, la consigne est calculée en fonction d'une valeur de tension reçue par l'un des ponts et/ou d'une valeur de tension à fournir par l'autre des ponts.

Selon un mode de réalisation, la tension reçue est alternative et la consigne est calculée en sorte que le convertisseur ait un fonctionnement de type PFC.

Selon un mode de réalisation, la fréquence commune résulte d'un calcul préalable basé sur une égalité entre ladite consigne et une valeur de puissance modélisée située de manière prédéfinie entre :

- une valeur extrémale de puissance transférable modélisée en fonction d'au moins une valeur représentative de durées entre lesdits instants des deux séquences ; et
- une valeur de puissance modélisée pour laquelle une valeur d'un courant dans le transformateur au cours de l'une des commutations est égale à un seuil de courant ou à zéro.

Selon un mode de réalisation, la fréquence commune a une valeur constante.

Selon un mode de réalisation :

- les deux séquences comprennent chacune deux cycles de commutations respectifs de deux branches du pont auquel la séquence est appliquée ;
- les cycles d'une première des deux séquences sont déphasés l'un par rapport à l'autre ; et
- les cycles d'une deuxième des deux séquences sont inverses l'un de l'autre.

Selon un mode de réalisation, les cycles de la première et/ou deuxième des deux séquences ont un rapport cyclique sensiblement égal à 0,5.

Selon un mode de réalisation :

- l'un des états de la première des deux séquences correspond à un sens donné d'application d'une tension au transformateur par le pont auquel la première des deux séquences est appliquée ; et
- la première des deux séquences évolue au cours d'une même demi-alternance d'une tension AC aux bornes de l'un des ponts, de sorte que :

  - pendant au moins une première période de temps, des commutations d'entrée et sortie dudit l'un des états se produisent à un même état de la deuxième des deux séquences ; et
  - pendant au moins une deuxième période de temps, des commutations d'entrée et sortie dudit l'un des états se produisent à des états différents de la deuxième des deux séquences.

Selon un mode de réalisation, les ponts sont commutés respectivement :

- selon les première et deuxième des deux séquences lorsque la valeur d'un rapport entre tensions respectives des ponts est supérieure à un rapport de transformation du transformateur ; et

- selon les deuxième et première des deux séquences lorsque la valeur du rapport entre tensions respectives des ponts est supérieure au rapport de transformation.

Selon un mode de réalisation, les séquences ont entre elles un écart de phase et sont générées sur la base de valeurs dudit écart de phase souhaitées opposées pour des valeurs inverses l'une de l'autre d'un rapport entre le rapport entre tensions et le rapport de transformation.

Selon un mode de réalisation, les ponts sont commutés respectivement :

- selon les première et deuxième des deux séquences lorsque la valeur du rapport entre tensions est supérieure au rapport de transformation ; et
- selon les deuxième et première des deux séquences lorsque la valeur du rapport entre tensions est inférieure au rapport de transformation.

Selon un mode de réalisation, les deux séquences sont générées à partir d'une même valeur représentative d'un écart entre des instants de commutation des deux séquences :

- pour une valeur d'un rapport entre tensions aux bornes des deux ponts supérieure au rapport de transformation ; et
- pour une valeur du rapport entre les tensions inférieure au rapport de transformation.

Un mode de réalisation prévoit un dispositif configuré pour mettre en œuvre un procédé tel que défini ci-dessus.

Un mode de réalisation prévoit un convertisseur comprenant un dispositif tel que défini ci-dessus.

Selon un troisième aspect, un mode de réalisation prévoit un procédé de commande d'un convertisseur comprenant deux ponts en H reliés par un transformateur, dans lequel :

- des répétitions de deux séquences de commutations entre plusieurs états sont appliquées respectivement aux deux ponts ;
- l'un des états d'une première des deux séquences correspond à un sens donné d'application d'une tension au transformateur par le pont auquel la première des deux séquences est appliquée ;
- la première des deux séquences évolue au cours d'une même demi-alternance d'une tension AC aux bornes de l'un des ponts, en sorte que :

  - pendant au moins une première période de temps, des commutations d'entrée et sortie dudit l'un des états se produisent à un même état d'une deuxième des deux séquences ; et
  - pendant au moins une deuxième période de temps, des commutations d'entrée et sortie dudit l'un des états se produisent à des états différents de la deuxième des deux séquences.

En d'autres termes, ce troisième aspect prévoit un procédé de commande d'un convertisseur comprenant deux ponts en H reliés par un transformateur, dans lequel :

- des répétitions de deux séquences de commutations entre plusieurs états sont appliquées respectivement aux deux ponts ; et
- les deux séquences sont générées à partir d'une même valeur représentative d'un écart entre des instants de commutation des deux séquences, ladite même valeur étant choisie selon qu'un rapport entre les tensions respectives aux bornes des ponts en H est supérieur ou inférieur à un rapport de transformation du transformateur.

Selon un mode de réalisation, le convertisseur fonctionne en mode élévateur de tension si ledit rapport entre les tensions est supérieur audit rapport de transformation et en mode abaisseur de tension dans le cas contraire.

Selon un mode de réalisation :

- les deux séquences comprennent chacune deux cycles de commutations respectifs de deux branches du pont auquel la séquence est appliquée ;
- les cycles d'une première des deux séquences sont déphasés l'un par rapport à l'autre ;
- les cycles d'une deuxième des deux séquences sont inverses l'un de l'autre ; et
- de préférence, les cycles de la première et/ou deuxième des deux séquences ont un rapport cyclique sensiblement égal à 0,5.

Selon un mode de réalisation, les commutations des séquences ont lieu à des instants résultant de calculs basés sur une égalité entre :

- une puissance à transférer entre les ponts par le convertisseur, représentée par une consigne ; et
- une puissance calculée à partir d'un modèle du convertisseur et à partir de valeurs des tensions aux bornes des ponts.

Selon un mode de réalisation, la consigne est calculée en fonction d'une valeur de tension reçue par l'un des ponts et/ou d'une valeur de tension à fournir par l'autre des ponts.

Selon un mode de réalisation, la tension reçue est alternative et la consigne est calculée en sorte que le convertisseur ait un fonctionnement de type PFC.

Selon un mode de réalisation, lesdits calculs sont en outre basés sur une égalité souhaitée entre valeurs d'un courant dans le transformateur à l'un des instants de commutation de l'une des deux séquences et à l'un des instants de commutation de l'autre des deux séquences.

Selon un mode de réalisation, pour chacun desdits calculs, une fréquence commune auxdites répétitions est choisie préalablement audit calcul.

Selon un mode de réalisation :

- au cours de la première période, la consigne est inférieure à une valeur maximale de puissance transférable estimée en fonction d'une valeur représentative d'une première durée entre instants de commutation des deux séquences ;
- au cours de la deuxième période, la consigne est supérieure à une valeur minimale de puissance transférable estimée en fonction d'une valeur représentative d'une deuxième durée entre instants de commutation des deux séquences ; et
- des passages de la première période à la deuxième période et/ou de la deuxième période à la première période sont déclenchés par le franchissement par la consigne, respectivement, de la valeur maximale et/ou de la valeur minimale.

Selon un mode de réalisation, chacune desdites commutations comprend un temps mort, et lesdits calculs sont basés, pendant au moins des parties centrales des première et deuxième périodes, sur une valeur de courant dans le transformateur à l'un des instants de commutation souhaitée supérieure à un seuil de courant, en sorte que les commutations soient de type ZVS pendant lesdites parties centrales.

Selon un mode de réalisation, pendant au moins une troisième période à cheval sur les première et deuxième périodes et située en dehors desdites parties centrales, lesdits calculs sont indépendants du seuil de courant.

Selon un mode de réalisation, les deux séquences sont générées à partir d'une même valeur représentative d'un écart entre des instants de commutation des deux séquences :

- pour une valeur d'un rapport entre tensions aux bornes des deux ponts supérieure à un rapport de transformation du transformateur ; et
- pour une valeur du rapport entre les tensions inférieure au rapport de transformation.

Selon un mode de réalisation, les ponts sont commutés respectivement :

- selon les première et deuxième des deux séquences lorsque la valeur d'un rapport entre tensions respectives des ponts est supérieure à un rapport de transformation du transformateur ; et
- selon les deuxième et première des deux séquences lorsque la valeur du rapport entre tensions respectives des ponts est supérieure au rapport de transformation.

Un mode de réalisation prévoit un dispositif configuré pour mettre en œuvre un procédé tel que défini ci-dessus.

Un mode de réalisation prévoit un convertisseur comprenant un dispositif tel que défini ci-dessus.

Selon un mode de réalisation, le transformateur comprend une inductance de fuite dont la valeur décroit lorsqu'un courant dans le transformateur augmente en valeur absolue.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de manière schématique, un exemple de convertisseur à découpage d'un type auquel s'appliquent les modes de réalisation décrits ;

la figure 2 représente, de manière schématique et sous forme de blocs, un exemple de procédé de commande du convertisseur de la figure 1 ;

la figure 3 représente, de manière schématique et sous forme de chronogrammes, un exemple d'étape de calcul d'une consigne de puissance du convertisseur de la figure 1 ;

la figure 4 représente, de manière schématique et sous forme de chronogrammes, un exemple de séquence de commutations de pont en H utilisée dans des modes de réalisation de procédés de commande de convertisseur ;

la figure 5 représente, de manière schématique et sous forme de chronogrammes, un exemple d'une autre séquence de commutations de pont en H utilisée dans des modes de réalisation de procédés de commande de convertisseur ;

la figure 6A représente, de manière schématique et sous forme de chronogrammes, un exemple de mode de réalisation d'une étape de commande d'un convertisseur à découpage ;

la figure 6B représente, de manière schématique et sous forme de chronogrammes, un exemple de mode de réalisation d'une autre étape de commande d'un convertisseur à découpage ;

la figure 6C représente, de manière schématique et sous forme de chronogrammes, un exemple de mode de réalisation d'encore une autre étape de commande d'un convertisseur à découpage ;

la figure 6D représente, de manière schématique et sous forme de chronogrammes, un exemple de mode de réalisation d'encore une autre étape de commande d'un convertisseur à découpage ;

la figure 7A représente, de manière schématique et sous forme de chronogrammes, un exemple de mode de réalisation d'encore une autre étape de commande d'un convertisseur à découpage ;

la figure 7B représente, de manière schématique et sous forme de chronogrammes, un exemple de mode de réalisation d'encore une autre étape de commande d'un convertisseur à découpage ;

la figure 7C représente, de manière schématique et sous forme de chronogrammes, un exemple de mode de réalisation d'encore une autre étape de commande d'un convertisseur à découpage ;

la figure 7D représente, de manière schématique et sous forme de chronogrammes, un exemple de mode de réalisation d'encore une autre étape de commande d'un convertisseur à découpage ;

la figure 8 représente, de manière schématique, un exemple d'allure d'une puissance en fonction d'un paramètre de commande utilisé aux étapes des figures 6A et 7A ;

la figure 9 représente, de manière schématique et sous forme de chronogrammes, un exemple de commutation d'interrupteurs d'un convertisseur ;

la figure 10 représente, de manière schématique et sous forme de blocs, un exemple d'un mode de réalisation d'un procédé de commande d'un convertisseur ;

la figure 11A représente, de manière schématique et sous forme de chronogrammes, des allures de paramètres de commande et de puissances en fonction du temps au cours d'un exemple de mise en œuvre du procédé de la figure 10 ;

la figure 11B représente, de manière schématique et à une échelle différente, des allures des puissances de la figure 11A ; et

la figure 12 représente, de manière schématique, un exemple d'allure d'une inductance en fonction d'un courant, selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.
Par souci de clarté, seuls les étapes et éléments utiles à la compréhension des modes de réalisation décrits ont été représentés et sont détaillés. En particulier, les éléments de convertisseur tels que des interrupteurs, des circuits de commande rapprochée (en anglais "driver"), un transformateur de convertisseur, une inductance de fuite d'un transformateur ou des éléments capacitifs, ne sont pas décrits en détails, les modes de réalisation décrits étant compatibles avec de tels éléments d'un convertisseur usuel.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

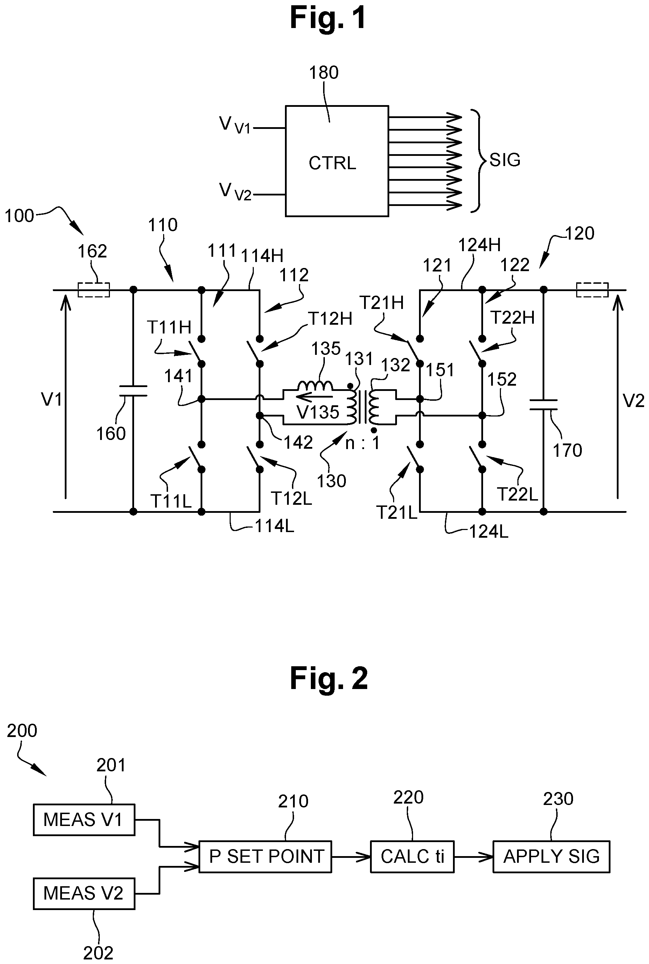

La figure 1 représente, de manière schématique, un exemple de convertisseur à découpage 100 d'un type auquel s'appliquent les modes de réalisation décrits.

Dans l'exemple représenté, le convertisseur 100 reçoit une tension V1 et fournit une tension V2.

La tension V1 peut être une tension alternative, ou tension AC (en anglais "AC voltage"), par exemple fournie par une source telle qu'un réseau de distribution électrique. La tension AC peut être de type sinusoïdal ou sensiblement sinusoïdal. La tension AC peut avoir une valeur efficace de l'ordre de 230 V ou de 110 V, et une fréquence égale à 50 Hz ou 60 Hz. La tension AC peut aussi provenir d'un alternateur. En variante, la tension V1 peut être une tension continue, par exemple en provenance d'une batterie ou de cellules photovoltaïques.

La tension V2 peut être une tension continue ou tension DC (en anglais "DC voltage"), par exemple liée à une batterie. A titre d'exemple, le convertisseur 100 peut alors constituer un chargeur de la batterie à partir de la tension V1. La batterie peut être une batterie de véhicule, et la tension DC évolue typiquement entre 250 V et 450 V au cours de la charge de la batterie. Le convertisseur est alors prévu pour fournir à la batterie une puissance typiquement comprise entre 1 kW et 30 kW au cours de la charge de la batterie. La tension DC peut également, dans un autre exemple, être fournie à un autre étage, non représenté, du convertisseur. En variante, la tension V2 peut être une tension alternative, par exemple liée à un réseau électrique (le convertisseur constituant alors un onduleur) ou à des bobinages d'un moteur électrique.

Le convertisseur 100 comprend un pont en H 110, par exemple recevant la tension V1. Par pont en H, on entend une association en parallèle d'au moins deux branches (branches 111 et 112 pour le pont en H 110) entre deux bornes ou nœuds (nœuds 114H et 114L pour le pont en H 110).

Chaque branche de pont est définie par une association de deux interrupteurs électriquement en série entre les bornes de la branche. Dans le pont en H 110, la branche 111 comprend des interrupteurs T11H et T11L en série entre les nœuds 114H et 114L, l'interrupteur T11H étant situé du côté du nœud 114H. La branche 112 comprend des interrupteurs T12H et T12L en série entre les nœuds 114H et 114L, l'interrupteur T12H étant situé du côté du nœud 114H.

Le convertisseur 100 comprend en outre un pont en H 120, par exemple fournissant la tension V2. Le pont en H 120 comprend deux branches 121 et 122 électriquement en parallèle entre des bornes 124H et 124L. La branche 121 comprend des interrupteurs T21H et T21L en série entre les nœuds 124H et 124L, l'interrupteur T21H étant situé du côté du nœud 124H. La branche 122 comprend des interrupteurs T22H et T22L en série entre les nœuds 124H et 124L, l'interrupteur T22H étant situé du côté du nœud 124H.

Dans l'exemple où la tension V1 est une tension AC, chacun des interrupteurs T11H, T11L, T12H, T12L est bidirectionnel en tension, c'est-à-dire qu'il est adapté, à son état bloqué, à empêcher le passage d'un courant dans les deux sens de la tension aux bornes de l'interrupteur bidirectionnel. Typiquement, chaque interrupteur bidirectionnel en tension peut comprendre, ou être constitué par, deux transistors à effet de champ de même type canal, par exemple un canal N, électriquement en série, de préférence connectés par leurs drains. Les modes de réalisation décrits sont compatibles avec les types usuels d'interrupteurs bidirectionnels en tension.

Ainsi, les interrupteurs du ou des ponts en H qui, parmi les ponts 110 et 120, fournit et/ou reçoit une tension alternative, sont bidirectionnels en tension.

Chaque interrupteur bidirectionnel en tension est commandé par application d'un signal de commande ayant deux niveaux correspondant respectivement aux états passant et bloqué de l'interrupteur. Cette application n'est pas décrite ici en détail, les modes de réalisation étant compatibles avec les procédés usuels d'application à un interrupteur bidirectionnel d'un tel signal de commande.

Typiquement, les interrupteurs T11H, T11L, T12H, T12L, T21H, T21L, T22H, T22L, des deux ponts sont en outre bidirectionnels en courant, c'est-à-dire chacun adapté, à son état passant, à permettre le passage d'un courant dans les deux sens dans l'interrupteur. Dans l'exemple où la tension V2 est continue, les interrupteurs T21H, T21L, T22H, T22L comprennent chacun un transistor à effet de champ, par exemple à canal N ayant son drain tourné du côté de la borne qui, parmi les bornes 124H et 124L d'application de la tension V2, a le potentiel le plus élevé (la borne 124H dans le sens représenté de la tension V2).

Les ponts en H 110 et 120 sont reliés par un transformateur 130. Autrement dit, le transformateur a un enroulement 131 reliant entre eux deux nœuds 141 et 142 de l'un des ponts en H (le pont 110) et un autre enroulement 132 reliant entre eux deux nœuds 151 et 152 de l'autre des ponts en H (le pont 120). Les nœuds 141, 142, 151, 152 sont des nœuds de connexion en série des interrupteurs, respectivement T11H et T11L, T12H et T12L, T21H et T21L, T22H et T22L, des branches respectives 111, 112, 121 et 122 des ponts en H. Dans l'exemple représenté, l'enroulement 131 a un point de phase du côté du nœud 141 et l'enroulement 132 a un point de phase du côté du nœud 152.

Le transformateur 130 comprend une inductance de fuite 135. Dans l'exemple représenté, l'inductance de fuite relie une borne de l'enroulement 131 au nœud 141. L'inductance de fuite 135 peut comprendre un ou plusieurs éléments inductifs, tels que des conducteurs bobinés, électriquement en série avec l'un et/ou l'autre des enroulements 131 et 132. L'inductance de fuite 135 peut également, en totalité ou en partie, résulter d'un couplage magnétique incomplet entre les enroulements 131 et 132. Autrement dit, dans ce cas, le transformateur 130 est présent, entre ses enroulements 131 et 132, un coefficient de couplage strictement inférieur à un.

L'inductance de fuite peut avoir une valeur constante ou sensiblement constante pour les valeurs du courant I135 circulant dans l'enroulement 131. La valeur de l'inductance de fuite est fonction de la puissance à transférer par le convertisseur, par exemple entre 10 W et 20 kW. A titre d'exemple, l'inductance de fuite 135 a une valeur comprise entre 1 et 1000 $\mu$H.

Le transformateur présente, entre les enroulements 132 et 131, un rapport de transformation n (n : 1). Par rapport de transformation entre un premier enroulement et un deuxième enroulement, on entend un rapport ou ratio entre un nombre de spires du deuxième enroulement et un nombre de spires du premier enroulement. Si le transformateur 130 est déconnecté du dispositif et si une tension est appliquée aux bornes de l'enroulement 132, le rapport de transformation est, typiquement, sensiblement égal au rapport entre une tension aux bornes de l'enroulement 131 et la tension appliquée. Le rapport de transformation dépend des tensions mises en jeu et de la puissance à transférer par le convertisseur. A titre d'exemple, le rapport de transformation est compris entre 0,5 et 1, par exemple de l'ordre de 0,75.

En fonctionnement, dans chaque branche, les deux interrupteurs sont commandés en inverse, c'est-à-dire de sorte que, lorsque l'un des interrupteurs de la branche est à l'état passant ou fermé, l'autre des interrupteurs de la branche est à l'état bloqué ou ouvert.

De préférence, dans chacune des branches 111, 112, 121 et 122, les interrupteurs sont mis alternativement aux états passant et bloqué à une fréquence de découpage. Autrement dit, chaque branche est commutée alternativement, de manière répétée, entre un état où l'un des interrupteurs de la branche est passant et un autre état où l'autre des interrupteurs est passant. Typiquement, à chaque commutation, un temps mort est prévu, pendant lequel les deux interrupteurs de la branche commutée sont bloqués simultanément, afin d'éviter une mise en court-circuit des bornes de la branche.

Ainsi, dans chaque pont, les commutations des branches forment une séquence de commutations. Les séquences de commutations des deux branches sont répétées à la fréquence de découpage. A chaque répétition des séquences de commutations, l'inductance de fuite a pour rôle de stocker/déstocker de l'énergie, de manière, à faire circuler cette énergie d'un pont à l'autre du convertisseur.

Pour cela, l'inductance de fuite 135 a à ses bornes une tension variable équivalente à une tension V135 aux bornes de l'inductance de fuite représentée. Plus précisément, la tension V135 est située entre le nœud 141 et l'enroulement 131. Le calcul de la valeur de la tension V135 aux bornes de l'inductance de fuite 135 en fonction de la convention choisie pour représenter cette inductance de fuite est à la portée de l'homme du métier à partir des exemples de la présente description.

De préférence, le convertisseur comprend en outre un élément capacitif 160 reliant les bornes 114L et 114H du pont en H 110. L'élément capacitif 160 peut être constitué par un condensateur et/ou plusieurs condensateurs en série et/ou en parallèle. La tension V1 est typiquement appliquée entre les nœuds 114H et 114L au travers d'une impédance 162. L'élément capacitif 160 et l'impédance 162 forment un filtre permettant de limiter des variations, à chaque commutation, de la tension V1 et/ou du courant fourni au convertisseur.

De préférence, le convertisseur comprend en outre un élément capacitif 170 reliant les bornes 124L et 124H du pont en H 120. L'élément capacitif 170 peut être constitué par un condensateur et/ou plusieurs condensateurs en série et/ou en parallèle. La tension V2 entre les nœuds 124H et 124L est typiquement fournie par le convertisseur au travers d'une impédance 172. L'élément capacitif 170 et l'impédance 172 forment un filtre permettant de limiter des variations, à chaque commutation, de la tension V2 et/ou du courant fourni par le convertisseur.

Le convertisseur comprend en outre un circuit de commande 180 (CTRL). Le circuit de commande 180 reçoit des valeurs $V_{V1}$ et $V_{V2}$ représentatives des tensions respectives V1 et V2. Les valeurs $V_{V1}$ et $V_{V2}$ peuvent être générées par tout dispositif usuel, non représenté, de mesure d'une tension entre deux bornes.

Le circuit de commande 180 fournit des signaux SIG de commande des interrupteurs T11H, T11L, T12H, T12L, T21H, T21L, T22H et T22L. Le circuit de commande 180 peut être constitué par tout dispositif adapté à mettre en œuvre un procédé de commande du convertisseur, et en particulier à générer les signaux de commande SIG.

Le circuit de commande 180 comprend typiquement une unité de traitement numérique de données, telle qu'un microprocesseur, et une mémoire. La mémoire comprend un programme. L'exécution du programme par le microprocesseur provoque la mise en œuvre du procédé de commande du convertisseur, c'est-à-dire la production des commandes SIG.

Les commandes SIG sont appliquées aux interrupteurs d'une manière usuelle par des circuits non représentés, tels que des circuits de commande rapprochée et/ou des circuits d'isolement entre des potentiels de référence des commandes des interrupteurs (par exemple des potentiels de source des transistors) et du circuit de commande 180.

La figure 2 représente, de manière schématique et sous forme de blocs, un exemple de procédé 200 de commande du convertisseur de la figure 1.

A une étape 201 (MEAS V1), la tension V1 entre les bornes 114H et 114L est mesurée. Il en résulte la valeur $V_{V1}$ (figure 1) représentative de la tension V1.

En variante, la tension V1 est prédéfinie. Dans le cas où la tension V1 est alternative, l'étape 201 peut alors être constituée par toute étape de génération d'une valeur représentative des valeurs de la tension V1 en fonction du temps, par exemple par toute étape de génération de valeurs évoluant de manière sinusoïdale en phase avec la tension V1. La valeur $V_{V1}$ peut aussi être une constante prédéfinie, dans le cas où la tension V1 est continue et prédéfinie.

A une étape 202 (MEAS V2), la tension V2 entre les bornes 124H et 124L est mesurée. Il en résulte la valeur $V_{V2}$ (figure 1) représentative de la tension V2. Les étapes 201 et 202 peuvent être simultanées.

A une étape 210 (P SET POINT), le circuit de commande 180 (figure 1) reçoit les valeurs $V_{V1}$ et $V_{V2}$ obtenues aux étapes 201 et 202. Le circuit de commande 180 détermine, c'est-à-dire calcule, à partir des valeurs $V_{V1}$ et/ou $V_{V2}$, une consigne de puissance P* (non représentée en figure 2), représentative d'une puissance à transférer par le convertisseur à partir du pont en H 110 jusqu'au pont en H 120.

Dans un exemple, le convertisseur a une consigne de puissance moyenne à fournir sur une ou plusieurs alternances de la tension alternative. Cette puissance moyenne peut correspondre à une puissance à fournir par exemple à une batterie en charge. La consigne P* peut alors être déterminée à partir de la seule valeur $V_{V1}$.

Cet exemple n'est pas limitatif, et, dans d'autres exemples pouvant correspondre à une utilisation différente d'une charge d'une batterie. La consigne P* est également déterminée à partir des valeurs $V_{V1}$ et $V_{V2}$.

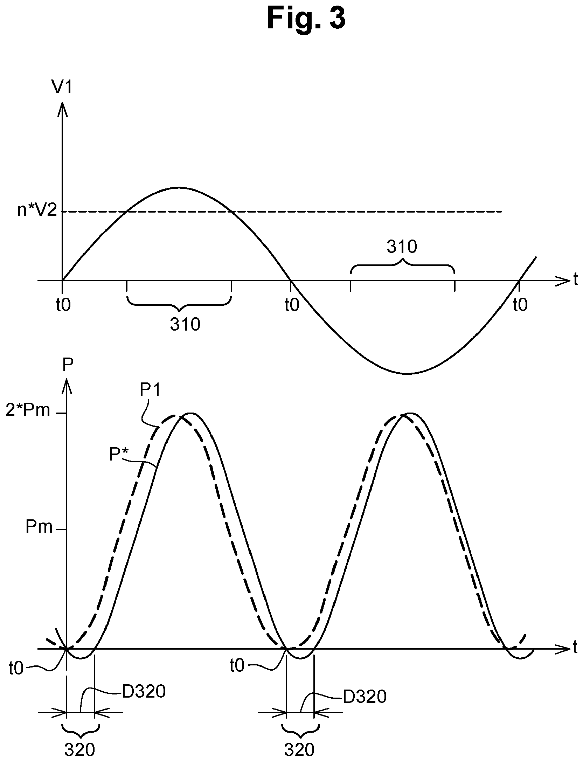

Un exemple de détermination de la consigne de puissance P* est décrit ci-après en relation avec la figure 3.

Après les étapes 201 et 202, à une étape 220 (CALC ti), le circuit de commande 280 calcule des instants ti, répétés à la fréquence de découpage, des commutations à appliquer aux branches 111, 112, 121 et 122.

Pour calculer les instants de commutation ti, un modèle du convertisseur est utilisé. Le modèle fournit, en fonction des tensions V1 et éventuellement V2, et des instants de commutation ti, une prédiction du fonctionnement du convertisseur. Le modèle fournit ainsi des valeurs modélisées, autrement dit prédites, c'est-à-dire des valeurs estimées à partir du modèle. Ces valeurs sont par exemple des courants, des tensions et/ou des puissances dans divers éléments du convertisseur, tels que les interrupteurs ou le transformateur. Le modèle est, de préférence, en sorte que, en fonctionnement, ces courants, tensions et/ou puissances prennent des valeurs sensiblement égales, de préférence égales, aux valeurs modélisées.

En particulier, le modèle fournit une valeur modélisée P de puissance transférée par le convertisseur du pont 110 au pont 120. Les calculs effectués à l'étape 220 sont en sorte que les instants ti sont ceux pour lesquels la valeur modélisée est égale à la consigne P*. Par valeur de puissance égale à la consigne P*, on entend que cette valeur est égale à la puissance représentée par la consigne P*.

Autrement dit, le calcul des instants ti est basé sur une égalité entre :

- la valeur de puissance représentée par la consigne de puissance P* ; et
- une puissance calculée à partir du modèle du convertisseur et des valeurs $V_{V1}$ et éventuellement $V_{V2}$.

Les signaux de commande SIG (figure 1) à appliquer aux interrupteurs du convertisseur sont alors fournis par le circuit de commande 180 à partir des instants ti calculés.

A une étape 230 (APPLY SIG), les signaux de commande SIG obtenus à l'étape 220 sont appliqués aux interrupteurs du convertisseur.

Le procédé de la figure 2 est, typiquement, mis en œuvre de manière répétée, les étapes de mesure 201 et 202 étant par exemple effectuées en continu, et les étapes 210 et 220 étant typiquement mises en œuvre à chaque boucle d'un programme du microcontrôleur du dispositif 180 (figure 1).

La figure 3 représente, de manière schématique et sous forme de chronogrammes, un exemple d'étape de calcul d'une consigne de puissance dans le convertisseur de la figure 1. Plus précisément, le calcul est effectué dans le cas préféré où la tension V1 aux bornes du pont H 110 (figure 1) est une tension AC. Plus précisément, on a représenté en figure 3 :

- un chronogramme de la tension V1 en fonction du temps t, sur la durée d'une alternance de la tension V1. On appelle alternance d'une tension AC l'ensemble de deux demi-alternances, chacune constituée d'une période pendant laquelle la tension AC a un seul signe entre deux passages par la valeur nulle à des instants t0 ; et
- un chronogramme représentant des allures de puissances (P), plus précisément une puissance cible P1 que l'on souhaite que le convertisseur prélève sur la source de la tension V1, et la puissance représentée par la consigne P* calculée.

Dans l'exemple représenté, la valeur de la tension V2 aux bornes du pont en H 120, multipliée par le rapport de transformation n (c'est-à-dire une valeur de tension n*V2) est inférieure à la valeur crête de la tension V1 aux bornes du pont en H 110. Il en résulte que, pendant une période 310 centrale de chaque demi-alternance de la tension V1, la tension V1 est, en valeur absolue, supérieure à la tension V2. En dehors des périodes 310, la tension V1 est, en valeur absolue, inférieure à la tension V2.

La consigne de puissance est calculée par l'égalité (1) suivante :

[Math 1]

$$P* = P1 - P160 \qquad (1)$$

où P160 représente une puissance fournie à l'élément capacitif 160 (figure 1) pour sa charge et sa décharge au cours des variations de la tension V1.

Les puissances P1 et P160 sont des grandeurs algébriques pouvant chacune prendre des valeurs positives et négatives. Par grandeur algébrique fournie à un élément, on entend que, lorsque la grandeur algébrique prend une valeur positive, celle-ci est effectivement fournie à l'élément, et que, lorsque la grandeur algébrique prend une valeur négative, celle-ci est, en valeur absolue, fournie par cet élément. La consigne P* peut également prendre des valeurs positive et négative. Par consigne négative d'une puissance à transférer du pont en H 110 (figure 1) au pont en H 120 (figure 1), on entend qu'une puissance représentée par la valeur absolue de cette consigne est à transférer du pont en H 120 au pont en H 110.

La puissance cible P1 est proportionnelle au (c'est-à-dire a un rapport constant avec le) carré V1*V1 de la tension V1. Ceci correspond à un fonctionnement de type PFC du convertisseur. La consigne P* fournie par la relation (1) correspond alors à la puissance que l'on souhaite que le convertisseur prenne à la source de tension V1, en vue d'obtenir un fonctionnement de type PFC du convertisseur. Un fonctionnement de type PFC évite de créer un déphasage et/ou des harmoniques dans le courant consommé par rapport à la tension d'entrée.

Dans le cas où la tension V1 est sinusoïdale, la puissance P* correspond à une sinusoïde élevée au carré, c'est-à-dire à une autre sinusoïde de fréquence double de celle de la tension V1 et variant entre 0 et une valeur maximale 2*Pm, où Pm est une puissance moyenne prise par le convertisseur sur la source de la tension V1.

Le calcul de la puissance P160 est calculée par une étape usuelle de calcul d'une puissance absorbée par un élément capacitif recevant une tension AC. La puissance P160 est une sinusoïde en quadrature avec la puissance P1. Il en résulte que, après chaque instant t0 où la tension alternative prend la valeur nulle, la consigne de puissance P* est négative pendant une période 320 de durée D320 débutant à l'instant t0. La consigne de puissance P* est positive en dehors des périodes 320.

Autrement dit la consigne P* représente, pendant les périodes 320, une puissance à transférer du pont en H 120 vers le pont en H 110, et, en dehors de ces périodes, une puissance à transférer du pont en H 110 vers le pont en H 120. Dit encore autrement, on souhaite que de l'énergie circule dans les deux sens entre les ponts du convertisseur.

Les modes de réalisation décrits prévoient, dans un convertisseur à découpage du type de celui de la figure 1, c'est-à-dire comprenant deux ponts en H reliés par un transformateur, d'obtenir des commutations à partir de la puissance P* permettant d'obtenir que la puissance transférée en pratique entre les ponts en H soit plus proche de la consigne de puissance P* que dans les procédés usuels d'obtention de commutations à partir d'une consigne de puissance. Il en résulte une amélioration du fonctionnement de type PFC, c'est-à-dire une réduction d'harmoniques dans le courant alternatif fourni par la source de la tension AC.

En outre, les modes réalisation décrits prévoient d'obtenir les commutations plus simplement que par les procédés usuels. En particulier, les modes de réalisation prévoient d'obtenir les commutations à appliquer aux branches pour les deux signes de la consigne de puissance (c'est-à-dire dans les deux sens de transfert d'énergie entre les ponts) et dans les deux sens supérieur/inférieur de comparaison entre la tension V1 et le produit n*V2 de la tension V2 par le rapport de transformation n.

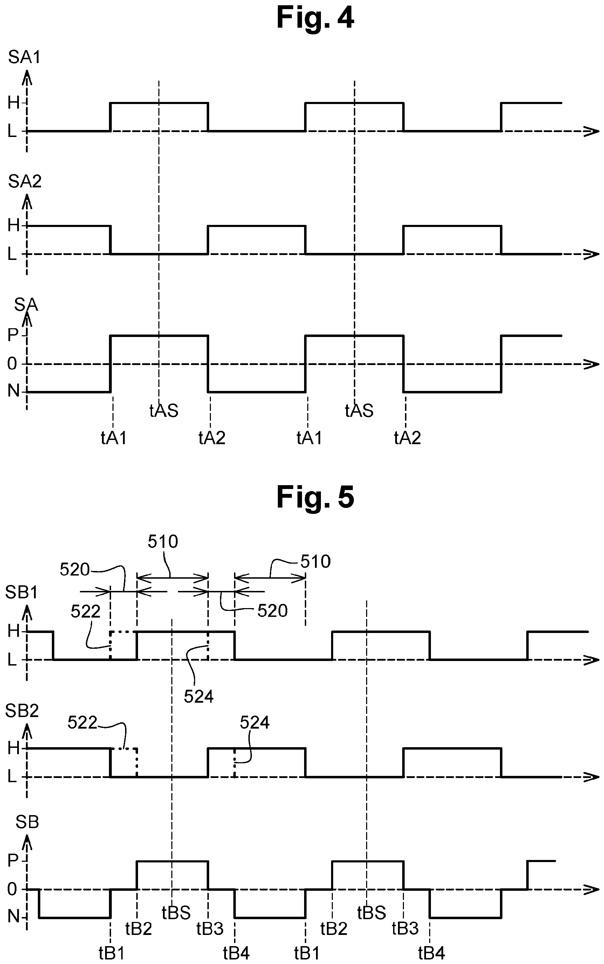

La figure 4 représente, de manière schématique et sous forme de chronogrammes, un exemple de séquence SA de commutations de pont en H utilisée dans des modes de réalisation de procédés de commande d'un convertisseur du type de celui de la figure 1.

A titre d'exemple, la séquence des commutations SA est appliquée au pont en H 110 (figure 1). La séquence de commutations SA est répétée à la fréquence de découpage.

La séquence de commutations SA comprend deux cycles de commutations SA1 et SA2 répétés dans les deux branches respectives 111 et 112 du pont en H 110. A titre d'exemple, on a représenté, pour chacun des cycles de commutations SA1 et SA2, des niveaux bas (L) et haut (H) correspondant aux états respectivement passant et bloqué de l'interrupteur T11H, T12H, de la branche à laquelle le cycle de commutations est appliqué. Autrement dit, les états représentés des cycles SA1 et SA2 correspondent aux commandes des interrupteurs respectifs T11H et T12H. Les commandes, non représentées, des interrupteurs T11L et T12L sont, à des temps morts près, inverses des commandes représentées des interrupteurs respectifs T11H et T12H.

Autrement dit, aux temps morts près, dans l'exemple où le cycle SA est appliqué au pont 110, pour chacun des cycles SA1 et SA2 :

- le niveau haut correspond à un état passant de l'interrupteur respectif T11H, T12H et à un état bloqué de l'interrupteur respectif T11L, T12L ; et
- le niveau bas correspond à un état bloqué de l'interrupteur respectif T11H, T12H, et à un état passant de l'interrupteur respectif T11L, T12L.

Les cycles SA1 et SA2 sont, de préférence, inverses l'un de l'autre. Autrement dit, les interrupteurs T11H et T12H du pont 110, situés du côté de la même borne 114H du pont 110, sont commandés en inverse l'un de l'autre. De même, les interrupteurs T11L et T12L du pont 110, situés du côté de la même borne 114L du pont 110, sont commandés en inverse l'un de l'autre.

Ainsi, à un instant tA1 de chaque répétition de la séquence SA, la séquence SA comprend deux commutations simultanées des cycles SA1 et SA2. A l'instant tA1, le pont 110 commute, autrement dit bascule, d'un état N à un état P. A l'état N, pour deux interrupteurs (T11H et T12H, ou T12L et T11L) du pont 110 situés du côté d'une même borne (respectivement 114H ou 114L) du pont 110, les états bloqué et passant sont commandés respectivement, et à l'état P, les états passant et bloqué sont commandés respectivement pour ces deux interrupteurs.

De manière similaire, à un instant tA2 de chaque répétition de la séquence SA, le pont 110 commute de l'état P vers l'état N.

A chaque répétition de la séquence de commutations, les instants tA1 et tA2 d'entrée et sortie de l'état P sont situés symétriquement par rapport à un instant tAS. L'instant tAS peut, en variante, être défini par celui par rapport auquel les instants tA2 et tA1 d'entrée et sortie de l'état N sont situés.

Chacun des cycles SA1 et SA2 a un rapport cyclique défini par la durée pendant laquelle le cycle SA1, SA2 est au niveau de commande de l'état passant de l'interrupteur respectif T11H, T12H (niveau haut). Dans le cas de cycles SA1 et SA2 inverses l'un de l'autre, les rapports cycliques des cycles SA1 et SA2 ont, à des temps morts près, leur somme égale à 1.

De préférence, les rapports cycliques des cycles SA1 et SA2 sont sensiblement égaux à 0,5, plus préférentiellement égaux à 0,5 à des temps morts près. Autrement dit, les cycles SA1 et SA2 inverses l'un de l'autre sont également en opposition de phase. Il en résulte que la séquence SA a des durées identiques pour les deux états N et P. A chaque répétition de la séquence SA, ces durées identiques sont situées symétriquement par rapport à l'instant tA1 ou à l'instant tA2. Ainsi, les états N et P de la séquence SA sont disposés symétriquement par rapport à l'instant tAS.

La séquence de commutations SA, décrite ci-dessus dans son application au pont en H 110, peut être appliquée au pont en H 120 (figure 1) de manière similaire, en remplaçant, par rapport à l'application au pont 110 décrite ci-dessus, les branches 111 et 112 respectivement par les branches 121 et 122 (figure 1). Plus précisément, pour cela, par rapport à l'application au pont 110 décrite ci-dessus, on remplace les interrupteurs T11H, T11L, T12H et T12L, respectivement, par les interrupteurs T21H, T21L, T22H et T22L.

La figure 5 représente, de manière schématique et sous forme de chronogrammes, un exemple d'une autre séquence de commutations de pont en H utilisée dans des modes de réalisation de procédés de commande d'un convertisseur du type de celui de la figure 1.

A titre d'exemple, la séquence des commutations SB est appliquée au pont en H 120 (figure 1). La séquence de commutations SB est répétée à la même fréquence de découpage que la séquence SA de la figure 4.

La séquence de commutations SB comprend deux cycles de commutations SB1 et SB2 répétés dans les deux branches respectives 121 et 122 du pont en H 120. A titre d'exemple, on a représenté, pour chacun des cycles de commutations SB1 et SB2, des niveaux bas (L) et haut (H) correspondant aux états respectivement passant et bloqué de l'interrupteur T21H, T22H de la branche à laquelle le cycle de commutations est appliqué. Autrement dit, les états représentés des cycles SB1 et SB2 correspondent aux commandes des interrupteurs respectifs T21H et T22H. Les commandes, non représentées, des interrupteurs T21L et T22L sont, à des temps morts près, inverses des commandes représentées des interrupteurs respectifs T21H et T22H.

Autrement dit, dans l'exemple où le cycle SB est appliqué au pont 120, pour chacun des cycles SB1 et SB2 :

- le niveau haut correspond à un état passant de l'interrupteur respectif T21H, T22H et à un état bloqué de l'interrupteur respectif T21L, T22L ; et
- le niveau bas correspond à un état bloqué de l'interrupteur respectif T21H, T22H, et à un état bloqué de l'interrupteur respectif T21L, T22L.

Chacun des cycles SB1 et SB2 a un rapport cyclique défini par la durée pendant laquelle le cycle SB1, SB2 est au niveau de commande de l'état passant de l'interrupteur respectif T21H, T22H (niveau haut). De préférence, les rapports cycliques des cycles SB1 et SB2 sont sensiblement égaux à 0,5, plus préférentiellement égaux à 0,5 à des temps morts près.

Les cycles SB1 et SB2 sont, de préférence, déphasés l'un par rapport à l'autre. Autrement dit, les cycles SB1 et SB2 ont un même rapport cyclique et présentent des périodes 510 pendant lesquelles les cycles SB1 et SB2 sont à des niveaux différents.

Il en résulte, à chaque répétition de la séquence SB :

- un instant tB1 de commutation du cycle SB2 de son état haut vers son état bas. Le pont 120 commute d'un état N vers un état O ;
- un instant tB2 de commutation du cycle SB1 de son état bas vers son état haut. Le pont 120 commute de l'état O vers l'état P ;
- un instant tB3 de commutation du cycle SB2 de son état bas vers son état haut. Le pont 120 commute de l'état P vers l'état O ; et
- un instant tB4 de commutation du cycle SB1 de son état haut vers son état bas. Le pont 120 commute de l'état O vers l'état N. La séquence SB retourne alors dans son état initial avant l'instant tB1.

Les instants tB1, tB2, tB3 et tB4 se succèdent à chaque séquence, dans cet ordre ou peuvent être permutés selon l'état initial choisi de la séquence SB.

Les états N et P du pont 120 correspondent aux états N et P décrits en relation avec la figure 4, à savoir que, pour les deux interrupteurs du pont situés du côté d'une même borne du pont, à l'état N, les états bloqué et passant sont commandés respectivement, et, à l'état P, les états passant et bloqué sont commandés respectivement. L'état O correspond à un état dans lequel deux interrupteurs du pont 120 situés du côté de l'une des bornes du pont 120 sont simultanément à l'état passant, les deux autres interrupteurs du pont (situés du côté de l'autre des bornes du pont 120) sont alors à l'état bloqué. Ainsi, à l'état O, la configuration des interrupteurs du pont 120 correspond à l'une parmi :

- la configuration dans laquelle les interrupteurs T21H et T22H sont passants et les interrupteurs T21L et T22L sont bloqués ; et
- la configuration dans laquelle T21H et T22H sont bloqués et les interrupteurs T21L et T22L sont passants.

A chaque répétition de la séquence de commutations, les instants tB2 et tB3 d'entrée et sortie de l'état P sont situés symétriquement par rapport à un instant tBS. L'instant tBS peut, en variante, être défini par celui par rapport auquel les instants tB4 et tB1 d'entrée et sortie de l'état N sont situés symétriquement, ou par celui par rapport auquel les instants tB1 et tB2, ou tB3 et tB4, sont situés symétriquement.

Pendant chacune des périodes 510, la séquence SB est à l'un des états N ou P. Les état N et P sont alternés dans les périodes 510 successives. Les périodes 510 sont séparées de périodes 520 pendant lesquelles la séquence est à l'état O.

Du fait que les rapports cycliques des cycles SB1 et SB2 sont égaux, les périodes 520 ont des durées identiques. En outre, du fait que les rapports cycliques des cycles SB1 et SB2 sont égaux à 0,5, la séquence SB est telle que les périodes 510 ont des durées identiques pour les deux états N et P. Il en résulte que les états N, O et P de la séquence SB sont disposés symétriquement par rapport à l'instant tBS.

Le fait de prévoir que les séquences SA (figure 4) et SB ait leurs états, respectivement N et P, et N, O et P, disposés symétriquement par rapport aux instants respectifs tAS et tBS permet, en fonctionnement, d'éviter la présence d'une composante continue du courant (I135, figure 1) dans le transformateur 130 (figure 1).

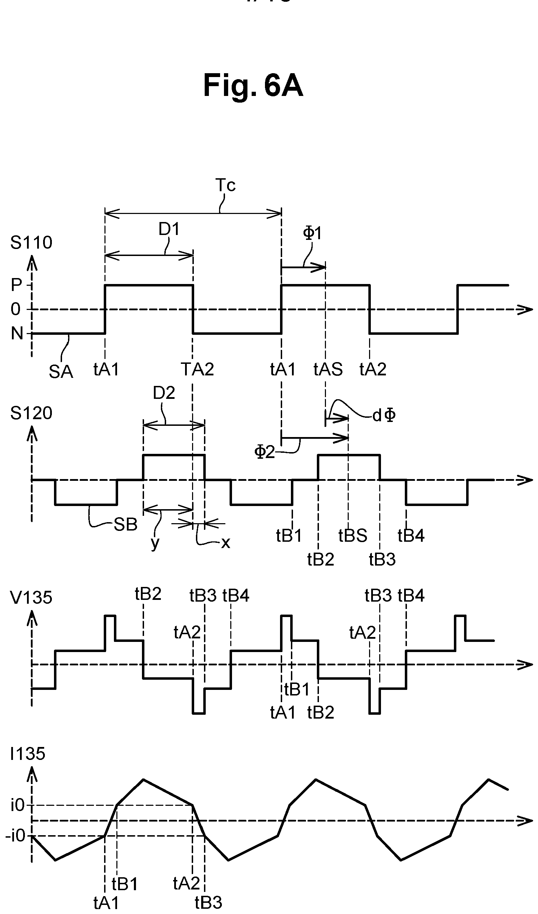

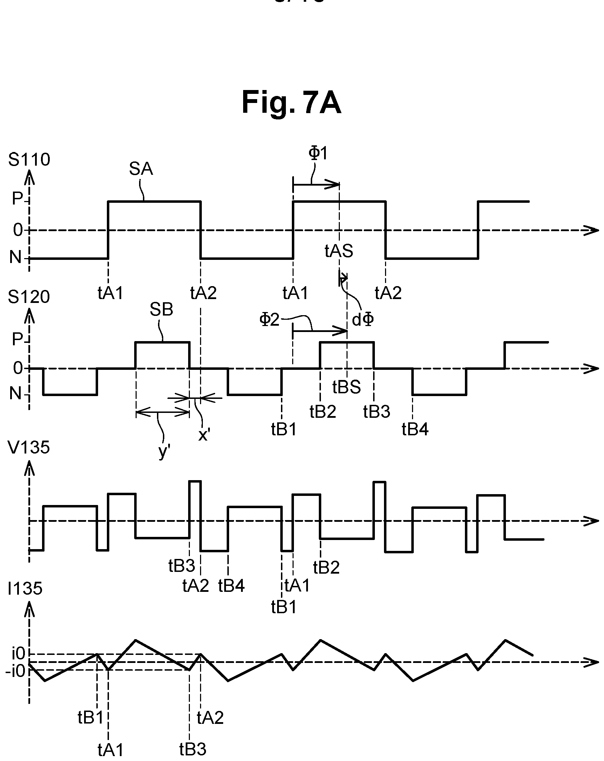

Dans des variantes des modes de réalisation, on peut prévoir toutes autres valeurs de rapports cycliques et/ou de déphasage des cycles SA1, SA2 et SB1, SB2 des séquences respectives SA et SB permettant de garantir l'absence d'une telle composante continue. Cependant, la prévision de séquences SA et SB symétriques par rapport aux instants tAS et tBS permet plus simplement d'éviter la composante continue. En outre, il en résulte avantageusement, comme ceci sera illustré en relation avec les figures 6A à 6C et 7A à 7D, que le courant dans le transformateur présente, dans ses deux sens de circulation, des évolutions symétriques l'une par rapport à l'autre, ce qui simplifie l'obtention d'une valeur modélisée du courant dans le transformateur en fonction du temps et d'une puissance modélisée P telle que celle définie en relation avec la figure 2.

Bien que l'état O de la séquence SB résulte, dans l'exemple des cycles SB1 et SB2 décrits ci-dessus, du déphasage des cycles SB1 et SB2 l'un par rapport à l'autre, en variante, on peut prévoir que l'état O de la séquence SB soit obtenu de manière différente de celle décrite ci-dessus, par exemple :

- par remplacement, à l'instant tB1, de la commutation du cycle SB2 de l'état haut vers l'état bas par une commutation du cycle SB1 de l'état bas vers l'état haut et, à l'instant tB2, de la commutation du cycle SB1 de l'état bas vers l'état haut par une commutation du cycle SB2 de l'état haut vers l'état bas (pointillés 522) ; et/ou
- par remplacement, à l'instant tB3, de la commutation du cycle SB2 de l'état bas vers l'état haut par une commutation du cycle SB1 de l'état haut vers l'état bas et, à l'instant tB2, de la commutation du cycle SB1 de l'état haut vers l'état bas par une commutation du cycle SB2 de l'état bas vers l'état bas (pointillés 524).

La séquence de commutations SB, décrite ci-dessus dans son application au pont en H 120, peut être appliquée au pont en H 110 (figure 1) de manière similaire, en remplaçant, par rapport à l'application au pont 120 décrite ci-dessus, les branches 121 et 122 respectivement par les branches 111 et 112 (figure 1). Plus précisément, pour cela, par rapport à l'application au pont 120 décrite ci-dessus, on remplace les interrupteurs T21H, T21L, T22H et T22L respectivement par les interrupteurs T11H, T11L, T12H et T12L.

Les figures 6A à 6D et 7A à 7D représentent, de manière schématique et sous forme de chronogrammes, des exemples de modes de réalisation d'étapes d'un procédé de commande d'un convertisseur du type du convertisseur 100 de la figure 1. De préférence, ces étapes sont mises en œuvre à l'étape 220 (figure 2) de calcul des instants ti de commutation des ponts et de génération des signaux de commande à appliquer aux ponts.

Chacune des figures 6A à 6D et 7A à 7D représente des allures en fonction du temps t :

- d'une séquence S110 de commutation du pont H 110 ;
- d'une séquence S120 de commutation du pont H 120 ;
- de la tension V135 (figure 1) aux bornes de l'inductance de fuite 135 du transformateur 130 ; et
- d'un courant I135 circulant dans l'inductance de fuite (c'est-à-dire, dans l'exemple représenté en figure 1, dans l'enroulement 131 du transformateur).

A chacune des étapes des figures 6A à 6D et 7A à 7D, on utilise les séquences SA et SB des figures 4 et 5, et on calcule les instants de commutation tA1, tA2, tB1, tB2, tB3 et tB4 des séquences SA et SB. Ces instants correspondent aux instants ti décrits en relation avec la figure 2.

Dans les exemples des étapes représentées en figures 6A à 6D et 7A à 7D, la tension V1 est positive, et appliquée dans un sens donné (entre les nœuds 141 et 142, figure 1) à un état P de la séquence S110, et dans un sens opposé (entre les nœuds 142 et 141) à un état N de la séquence S110. Autrement dit, les états N et P de la séquence S110 correspondent aux sens respectifs d'application de la tension V1 au transformateur par le pont en H 110. Une tension nulle est appliquée entre les nœuds 141 et 142 (autrement dit, ces nœuds sont mis en court-circuit) à un état O de la séquence S110.

De même, la tension V2 est positive et appliquée dans un sens donné (entre les nœuds 151 et 152, figure 1) à un état P de la séquence S120, et dans un sens opposé (entre les nœuds 142 et 141) à un état N de la séquence S120. Autrement dit, les états N et P de la séquence S120 correspondent aux sens respectifs d'application de la tension V2 au transformateur par le pont en H 120. Une tension nulle est appliquée entre les nœuds 151 et 152 à un état O de la séquence S120.

Les étapes des figures 6A à 6D peuvent être mises en œuvre dans un premier mode de fonctionnement du convertisseur. Plus précisément, une ou plusieurs des étapes 6A à 6D, par exemple toutes ces étapes, sont mises en œuvre dans des périodes différentes où le convertisseur fonctionne selon le premier mode.

A l'étape de la figure 6A, la valeur de tension n*V2 (figure 3), est supérieure à celle de la tension V1. En d'autres mots, le rapport ou ratio V1/V2 entre tensions aux bornes, respectivement, du pont en H 110 et du pont en H 120, est inférieur au rapport de transformation n entre l'enroulement 132 situé du côté du pont en H 120 et l'enroulement 131 situé du côté du pont en H 110. En outre, on prévoit que l'énergie circule du pont en H 110 vers le pont en H 120.

On applique au pont en H 110, de manière répétée à la fréquence de découpage, la séquence SA décrite ci-dessus en relation avec la figure 4. Ainsi, la séquence S110 correspond à la séquence SA. Autrement dit, les états P et N de la séquence S110 correspondent aux états respectifs P et N de la séquence SA, et la séquence S110 ne prend pas l'état O.

On applique au pont en H 120, de manière répétée à la fréquence de découpage, la séquence SB décrite ci-dessus en relation avec la figure 5. Ainsi, la séquence S120 correspond à la séquence SB. Autrement dit, les états P, O et N de la séquence S110 correspondent aux états respectifs P, O et N de la séquence SB.

Comme mentionné ci-dessus, la présente étape est mise en œuvre dans le premier mode de fonctionnement du convertisseur. Dans ce premier mode de fonctionnement, les commutations d'entrée et sortie d'un état donné de la séquence SB parmi les états N et P se produisent à des états différents de la séquence SA. Dans la présente étape, les commutations d'entrée tB2 et de sortie tB3 de l'état P de la séquence SB se produisent respectivement aux états P et N de la séquence SA. Les commutations d'entrée tB4 et de sortie tB1 de l'état N de la séquence SB se produisent respectivement aux états N et P de la séquence SA. Autrement dit, une commutation (ici à l'instant tA2) de la séquence SA a lieu entre les commutations d'entrée et sortie (instants tB2, tB3) de l'état P de la séquence SB. Une commutation (ici à l'instant tA1) de la séquence SA a lieu entre les commutations d'entrée et sortie (instants tB4, tB1) de l'état N la séquence SB.

Les instants de commutation tB1, tB2, tB3 et tB4 de la séquence SB sont définis par rapport aux instants tA1 et tA2 de la séquence SA par deux paramètres x et y. Les paramètres x et y sont compris entre 0 et 0,5 et correspondent chacun à une fraction du temps de cycle Tc de découpage (inverse de la fréquence de découpage). La durée y*Tc (représentée en figure 6A par la lettre y) sépare chaque instant tB2 de l'instant tA2 suivant, et la durée x*Tc (représentée en figure 6A par la lettre x) sépare chaque instant tA2 de l'instant TB3 suivant. Autrement dit, les paramètres x et y constituent des valeurs représentatives d'écarts entre les instants de commutation, respectivement tA2 et tB3, et tB2 et tA2. Les paramètres x et y sont calculés de manière décrite ci-après.

Les séquences SA et SB sont générées à partir des paramètres x et y calculés. Les séquences SA et SB ont entre elles un déphasage dϕ entre l'instant tAS et l'instant tBS. Les séquences sont alors appliquées aux ponts en H 110 et 120.

De préférence, pour générer les séquences SA et SB, on définit un instant de référence des séquences. Cet instant est par exemple généré par un signal de type horloge à la fréquence de découpage. A titre d'exemple, l'instant de référence est, dans la présente étape, l'instant tA1 de passage à l'état P de la séquence S110 appliquée au pont en H 110. Les autres instants de commutation des séquences SA et SB sont définis par :

- un déphasage $\varphi 1$ de la séquence S110 entre l'instant tA1 de référence des séquences et l'instant tAS de symétrie de la séquence SA appliquée au pont en H 110 ;
- un déphasage $\varphi \mathbf{2}$ de la séquence S120 entre l'instant tA1 de référence des séquences et l'instant tBS de symétrie de la séquence SB appliquée au pont en H 120 ;
- un rapport cyclique D1 de la séquence S110, défini par le rapport entre la durée d'un état P de la séquence S110, et le temps de cycle Tc ; et
- un rapport cyclique D2 de la séquence S120, défini par le rapport entre la durée d'un état P de la séquence S120, et le temps de cycle Tc.

Les déphasages $\varphi \mathbf{1}$ et $\varphi \mathbf{2}$, et les rapports cycliques D1 et D2, sont donnés par les égalités (2) suivantes :
[Math 2]

$$
\begin{aligned}
D1 &= 0,5 \\
\varphi 1 &= \frac{\pi}{2} \\
D2 &= x + y \\
\varphi 2 &= 2\pi \left( \frac{1}{2} + \frac{x-y}{2} \right)
\end{aligned}
\qquad (2)
$$

La tension V135 prend les valeurs -V1-n*V2, -V1, V1-n*V2, n*V2-V1, V1, et V1+n*V2 lorsque les états respectifs des séquences S110 et S120 sont, respectivement, N et P, N et O, P et P, N et N, P et O, et P et N, à savoir, respectivement, entre les instants tA2 et tB3, tB3 et tB4, tB2 et tA2, tB4 et tA1, tB1 et tB2, et TA1 et TB1.

De préférence, pour calculer les paramètres x et y, on cherche les valeurs de ces paramètres qui permettent d'obtenir une égalité entre les valeurs i0 du courant I135 dans le transformateur aux instants tB1 et tA2. Autrement dit, les paramètres x et y, et donc, à partir de ces paramètres, les instants tA1, tA2, tB1, tB2, tB3 et tB4, résultent de calculs basés sur une égalité souhaitée, ou ciblée, entre les valeurs i0 du courant I135 dans le transformateur aux instants tB1 de la séquence SB et tA2 de la séquence SA, les instants tB1 et tA2 étant séparés par l'instant tB2 de la séquence SB.

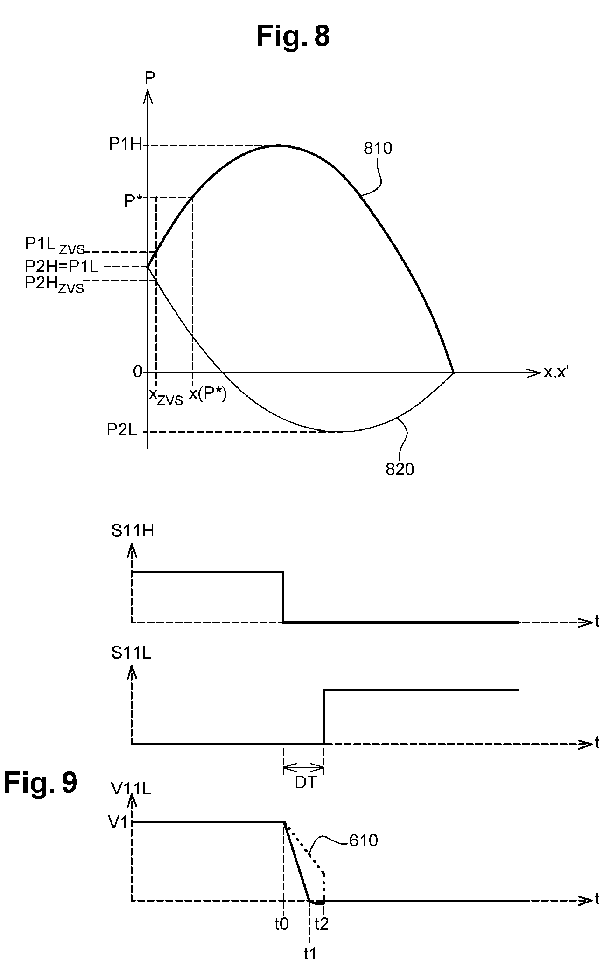

Pour cela, on utilise un modèle du convertisseur, de la manière décrite en relation avec la figure 2. Le modèle fournit des valeurs modélisées du courant I135 aux instants tB1 et tA2 en fonction des paramètres x et y, en tenant compte de valeurs telles que celles des tensions V1 et V2 aux bornes des ponts 110 et 120. Le modèle du convertisseur peut être tout modèle usuel d'un convertisseur comprenant deux ponts en H reliés par un transformateur. Un exemple d'un modèle préféré du convertisseur est décrit ci-après en relation avec la figure 8, et correspond à une ou plusieurs expressions algébriques fournissant la valeur modélisée du courant I135 en fonction du temps t et des paramètres x et y.

De préférence, le calcul des paramètres x et y consiste à choisir, parmi toutes les valeurs possibles des paramètres x et y, celles pour lesquelles le courant I135 a, aux instants tB1 et tA2, les mêmes valeurs modélisées.

Autrement dit, les valeurs calculées des paramètres x et y sont celles pour lesquelles une relation d'égalité entre les valeurs modélisées en fonction des paramètres x et y est satisfaite ou vérifiée. Ceci peut être obtenu par tout procédé usuel de recherche de paramètres pour lesquels une relation entre valeurs fonction de ces paramètres est satisfaite.

Dans des exemples, tel que celui décrit ci-après en relation avec la figure 8, la relation entre valeurs fonction des paramètres x et y est algébrique, et le choix de valeurs des paramètres x et y qui vérifient cette relation peut être effectué en choisissant une seule des deux valeurs (par exemple celle du paramètre x) et en calculant l'autre des deux valeurs à partir de cette relation algébrique.

Dans d'autres exemples, le modèle de convertisseur est numérique, et la relation entre valeurs fonction des paramètres x et y est calculée numériquement. Le procédé de recherche des paramètres x et y est alors typiquement une recherche numérique par des itérations successives. A chaque itération, des valeurs estimées des paramètres x et y se rapprochent de celles pour lesquelles la relation est vérifiée.

Du fait que le courant I135 présente des évolutions symétriques dans ses deux sens de circulation du courant, l'égalité souhaitée entre valeurs i0 du courant I135 aux instants tB1 et tA1 correspond aussi à une égalité souhaitée entre valeurs -i0 du courant I135 aux instants tA1 et tB3 séparés par l'instant tB2 de commutation, ainsi qu'à des égalités souhaitées, en valeur absolue, du courant I135 aux instants consécutifs (c'est-à-dire non séparés par une commutation) tA1 et TB1, et/ou aux instants consécutifs tA2 et tB3.

Dans des variantes, le calcul des paramètres x et y peut être effectué sur la base de toute relation souhaitée, définie en fonction du courant dans le transformateur aux instants de commutation des deux séquences. Un exemple d'une telle relation souhaitée est une égalité souhaitée entre un rapport entre valeurs du courant aux instants tB1 et tA2, et une valeur prédéfinie pouvant être différente de 1.

A partir du modèle du convertisseur, en particulier à partir des valeurs modélisées I135 et V135, on peut calculer une valeur modélisée P de la puissance transférée en fonction du temps par le convertisseur du pont en H 110 vers le pont en H 120, en moyenne à chaque répétition des séquences de commutations.

De préférence, le calcul des paramètres x et y consiste alors à choisir, parmi toutes les valeurs possibles des paramètres x et y, celles pour lesquelles la consigne de puissance P* décrite en relation avec les figures 2 et 3 est égale à la valeur modélisée P. Autrement dit, le calcul des paramètres x et y est basé sur une égalité entre la consigne de puissance P* et la puissance calculée à partir du modèle du convertisseur et des valeurs des tensions V1 et V2.

Dans des exemples de calcul des paramètres x et y, tel que celui décrit ci-après en relation avec la figure 8, le modèle correspond à une expression algébrique P(x, y) fournissant la valeur P en fonction des paramètres x et y. Le calcul peut alors comprendre tout procédé usuel, par exemple numérique, de résolution de l'équation P* = P(x, y) pour obtenir un ensemble de valeurs à choisir pour les paramètres x et y.

Dans d'autres exemples, le modèle du convertisseur est numérique, et les paramètres x et y sont calculés numériquement par tout procédé usuel de résolution de l'équation, tel qu'un procédé itératif.

Plus préférentiellement, le calcul des paramètres x et y, et donc des instants des commutation des séquences SA et SB, est basé à la fois sur l'égalité souhaitée entre courants aux instants tB1 et tA2, et sur l'égalité souhaitée entre la consigne de puissance P* et la puissance transférée par le convertisseur entre les ponts.

Dans des variantes, on peut remplacer la consigne de puissance par toute valeur représentative d'une consigne fournie au convertisseur, telle qu'une consigne d'un courant à prélever sur l'un des ponts et/ou à fournir par l'autre des ponts. L'égalité souhaitée entre la consigne P* et la puissance modélisée est alors remplacée par une égalité entre cette consigne de courant et une valeur moyenne de ce courant, modélisée d'après le modèle du convertisseur, sur chaque répétition des séquences SA et SB.

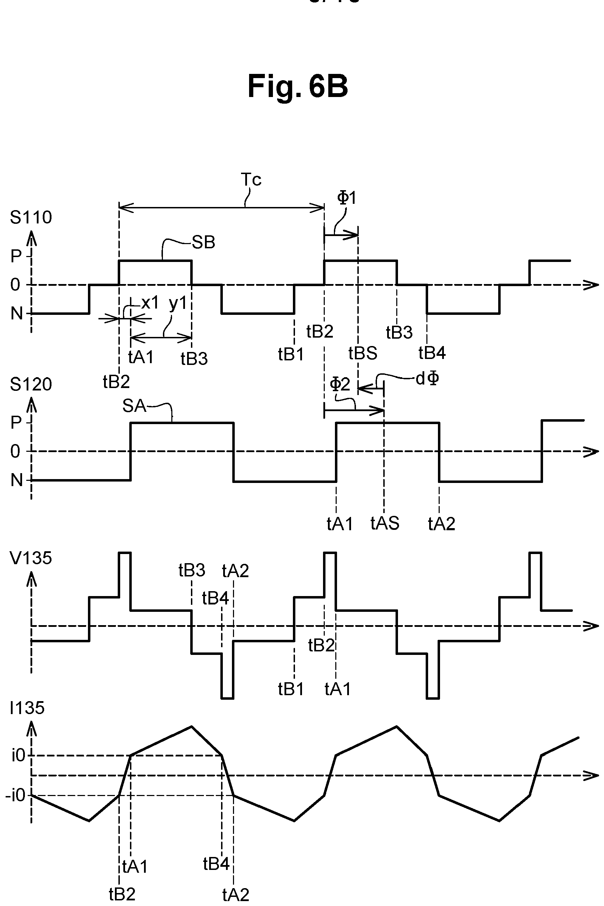

A l'étape de la figure 6B, contrairement à l'étape de la figure 6A, la valeur de tension n*V2 (figure 3), est inférieure à celle de la tension V1. En d'autres termes, le rapport, ou ratio, V1/V2 entre tensions aux bornes, respectivement, du pont en H 110 et du pont en H 120, est supérieur au rapport de transformation n entre l'enroulement 132 situé du côté du pont en H 120 et l'enroulement 131 situé du côté du pont en H 110. Ainsi, un choix de l'étape de la figure 6A ou de la figure 6B à mettre en œuvre est effectué en fonction du résultat de la comparaison du rapport V1/(n*V2) entre le rapport V1/V2 et le rapport de transformation n avec l'unité. En outre, on prévoit, comme à l'étape de la figure 6A, que l'énergie circule du pont en H 110 vers le pont en H 120.

A la différence de l'étape de la figure 6A, on applique, de manière répétée à la fréquence de découpage, au pont en H 110, la séquence SB décrite ci-dessus en relation avec la figure 5, et, au pont en H 120, la séquence SA décrite ci-dessus en relation avec la figure 4. Ainsi, la séquence S110 correspond à la séquence SB et la séquence S120 correspond à la séquence SA. Autrement dit, les états P, O et N de la séquence S110 correspondent aux états respectifs P, O et N de la séquence SB, et les états P et N de la séquence S120 correspondent aux états respectifs P et N de la séquence SA.

Comme l'étape de la figure 6A, l'étape de la figure 6B est mise en œuvre dans le premier mode de fonctionnement, dans lequel les commutations d'entrée et sortie d'un état donné de la séquence SB parmi les états N et P se produisent à des états différents de la séquence SA. Dans la présente étape, les commutations d'entrée tB2 et de sortie tB3 de l'état P de la séquence SB se produisent respectivement aux états N en P de la séquence SA. Les commutations d'entrée tB4 et de sortie tB1 de l'état N de la séquence SB se produisent respectivement aux états P et N de la séquence SA.

Les instants de commutation tB1, tB2, tB3 et tB4 de la séquence SB sont déterminés par rapport aux instants tA1 et tA2 de la séquence SA par deux paramètres x1 et y1 compris entre 0 et 0,5 et correspondant chacun à une fraction du temps de cycle Tc de découpage. La durée x1*Tc (représentée par x1) sépare chaque instant tB2 de l'instant tA1 suivant, et la durée y1*Tc (représentée par y1) sépare chaque instant tA1 de l'instant TB3 suivant.

De préférence, les instants de commutation sont définis par rapport à l'instant de référence des séquences. A titre d'exemple, l'instant de référence est, dans la présente étape, l'instant tB2 de passage à l'état P de la séquence S110 appliquée au pont en H 110. Les autres instants de commutation des séquences SA et SB sont définis de la façon suivante :

- le déphasage $\varphi$**1** est défini de la même manière qu'à l'étape de la figure 6A, à savoir par le déphasage de la séquence S110 entre l'instant tB2 de référence des séquences et l'instant tBS de symétrie de la séquence SB appliquée au pont en H 110 ;
- le déphasage $\varphi$**2** est défini de la même manière qu'à l'étape de la figure 6A, à savoir par le déphasage de la séquence S120 entre l'instant tB2 de référence des séquences et l'instant tAS de symétrie de la séquence SA appliquée au pont en H 120 ;
- les rapports cycliques D1 et D2, définis de la même manière qu'à l'étape de la figure 6A.

La tension V135 prend les valeurs -V1-n*V2, -n*V2, n*V2-V1, V1-n*V2, n*V2, et V1+n*V2 lorsque les états respectifs des séquences S120 et S110 sont, respectivement, N et P, N et O, P et P, N et N, P et O, et P et N, à savoir, respectivement, entre les instants tB4 et tA2, tB3 et tB4, tA2 et tB1, tA1 et tB3, tB1 et tB2, et TB2 et TA1.

Selon un premier aspect des modes de réalisation, pour obtenir les paramètres x1 et/ou y1 dans la présente étape (à laquelle le rapport V1/V2 est supérieur au rapport de transformation n), on donne aux paramètres x1 et/ou y1 les mêmes valeurs que les paramètres respectifs x et/ou y de l'étape de la figure 6A (à laquelle le rapport V1/V2 est inférieur au rapport de transformation n).

Il en résulte que les calculs des paramètres x et/ou y, décrits ci-dessus en relation avec la figure 6A et dont un exemple est décrit ci-après en relation avec la figure 8, peuvent, au moins en partie, être utilisés pour calculer les paramètres x1 et/ou y1. Ceci permet de simplifier l'obtention des paramètres x1 et/ou y1.

Les calculs des paramètres x et/ou y peuvent être utilisés pour simplifier l'obtention des paramètres x1 et/ou y1 en mettant en œuvre une ou plusieurs des étapes consistant à :

- utiliser une partie du programme mis en œuvre par le circuit de commande (180, figure 1) fournissant les paramètres x et/ou y, et en déduire les paramètres x1 et/ou y1. Autrement dit, une même partie du programme sert pour calculer les paramètres x et/ou y, et x1 et/ou y1 ;
- comme dans l'exemple de la figure 8 ci-après, utiliser une ou des expressions algébriques fournissant les paramètres x et/ou y, en déduire les paramètres x1 et/ou y1. Autrement dit, une ou plusieurs expressions algébriques sont les mêmes pour calculer les paramètres x et/ou y, et x1 et/ou y1 ;
- mémoriser au moins une partie de valeurs calculées à l'étape de la figure 6A pour obtenir les paramètres x et/ou y, telles que des valeurs intermédiaires des calculs ; et/ou
- mémoriser les valeurs des paramètres x et/ou y obtenus à l'étape de la figure 6A.

De préférence, les paramètres x1 et y1 prennent tous les deux les mêmes valeurs que les paramètres respectifs x et y. Il en résulte que le déphasage, ou écart de phase, dφ, défini en relation avec la figure 6A, entre les séquences SA et SB prend, à l'étape de la figure 6B, une valeur opposée à celle de ce déphasage à l'étape de la figure 6A. Par valeurs opposées, on entend des mêmes valeurs absolues et des signes opposés. Autrement dit, les séquences SA et SB sont générées sur la base de valeurs du déphasage dφ souhaitées opposées aux étapes des figures 6A et 6B.

Il en résulte, lorsque le rapport V1/(n*V2) entre le rapport V1/V2 des tensions V1 et V2 et le rapport de transformation n prend à l'étape de la figure 6B, une valeur (de l'ordre de 1,5 dans l'exemple représenté en figure 6B) inverse de celle de la figure 6A (de l'ordre de 1/1,5 dans l'exemple représenté en figure 6A), le courant I135 prend des mêmes valeurs modélisées aux instants tA1 de la séquence SA et tB4 de la séquence SB. Le courant I135 prend ainsi des mêmes valeurs absolues modélisées aux instants tB2, tA1, tB4 et tA2, autrement dit, le courant I135 présente à l'étape de la figure 6B des égalités souhaitées entre valeurs similaires aux égalités de l'étape de la figure 6A. Les paramètres x1 et y1 pour lesquels l'égalité souhaitée entre valeurs du courant I135 est vérifiée, sont obtenus plus simplement que s'ils étaient obtenus de la manière décrite en relation avec la figure 6A.

De préférence, on choisit à l'étape de la figure 6B une même fréquence de découpage que celle de l'étape de la figure 6A. Plus préférentiellement, on donne alors aux paramètres x1 et y1 les valeurs des paramètres x et y lorsque le rapport P*/(V1*V2) entre la consigne de tension et le produit des tensions V1 et V2 est le même aux étapes de la figure 6A et de la figure 6B. Par produit des tensions V1 et V2, on entend ici le résultat V1*V2 de la multiplication entre elles des valeurs des tensions V1 et V2. Lorsque paramètres x1 et y1 correspondent aux égalités souhaitées entre valeurs de courant, il en résulte que la consigne de puissance P* est égale, ou sensiblement égale, à la valeur modélisée P de puissance, sans qu'il soit besoin d'effectuer le calcul de cette puissance modélisée. Ce résultat est illustré ci-après dans l'exemple particulier du modèle de convertisseur décrit en relation avec la figure 8. L'étape de la figure 6B est ainsi particulièrement simple à mettre en œuvre.

Dans un exemple particulier, on donne aux paramètres x1 et y1 les valeurs des paramètres x et y lorsque les valeurs respectives $V_{V1B}$ et $V_{V2B}$ des tensions V1 et V2 à l'étape de la figure 6B sont respectivement égales au produit $n*V_{V2A}$ et au rapport $V_{V1A}/n$, où $V_{V1A}$ et $V_{V2A}$ sont les valeurs respectives des tensions V1 et V2 à l'étape de la figure 6A. Ceci permet d'obtenir les valeurs inverses décrites ci-dessus du rapport V1/(n*V2) aux étapes des figures 6A et 6B. De préférence, ceci est mis en œuvre lorsque la consigne de puissance est la même pour les étapes des figures 6A et 6B. Il en résulte alors que le rapport P*/(V1*V2) est le même à ces deux étapes.

Lorsque les paramètres x1 et y1 sont égaux respectivement aux paramètres x et y, les déphasages $\varphi1$ et $\varphi2$, et les rapports cycliques D1 et D2, sont donnés par les égalités (3) suivantes :

[Math 3]

$$D1 = x + y$$
$$\varphi1 = 2\pi\left(\frac{x+y}{2}\right)$$
$$D2 = 0,5 \qquad\qquad (3)$$
$$\varphi2 = 2\pi\left(\frac{1}{4} + x\right)$$

En variante, un seul des deux paramètres x1 et y1, de préférence, le paramètre x1, prend la même valeur que le paramètre x. L'autre des deux paramètres peut alors résulter :

- d'un calcul basé sur une égalité souhaitée entre des valeurs i0 du courant I135 aux instants tA1 de la séquence SA et tB4 de la séquence SB séparés par l'instant tB3 de la séquence SB, et/ou des valeurs -i0 du courant I135 aux instants tB2 et t12, et/ou des valeurs absolues du courant I135 aux instants tB2 et tA1, et tB4 et tA2 ; ou
- d'un calcul basé sur une égalité entre l'opposé de la consigne P* et la valeur modélisée P de la puissance transférée par le convertisseur entre le pont en H 110 et le pont en H 120.

Des modes de réalisation selon le premier aspect sont décrits ci-dessus, dans lesquels on donne aux paramètres x1 et/ou y1 des valeurs égales, respectivement, à celles des paramètres x et/ou y calculés à l'étape de la figure 6A. Comme mentionné ci-dessus, il en résulte que l'on évite de mettre en œuvre, à l'étape de la figure 6B, des calculs similaires à ceux décrits en relation avec la figure 6A. Dans d'autres modes de réalisation selon le premier aspect, on calcule, à l'étape de la figure 6B, les paramètres x1 et/ou y1 d'une manière similaire à celle décrite en relation avec la figure 6A, et, à l'étape de la figure 6A, on donne aux paramètres x et/ou y les valeurs respectives des paramètres x1 et/ou y1 calculés.

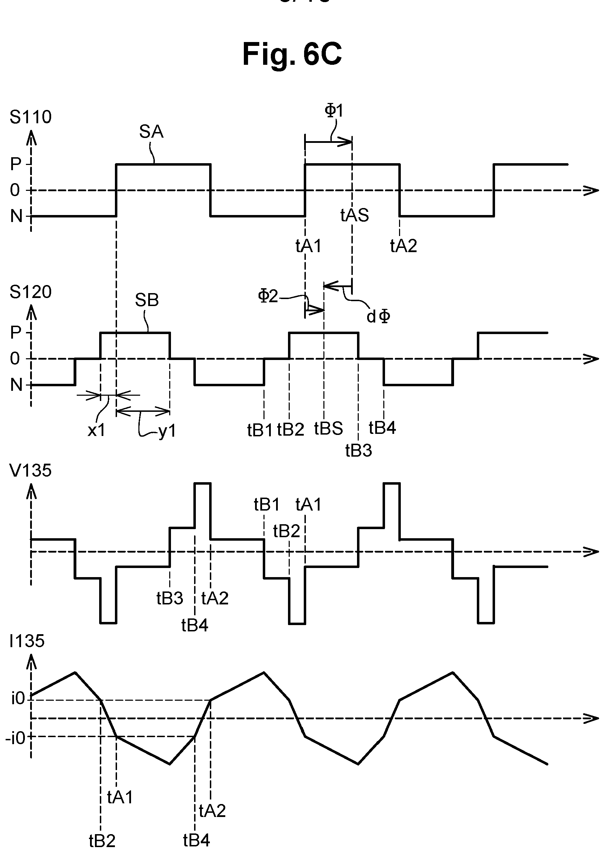

A l'étape de la figure 6C, comme à l'étape de la figure 6A, la valeur de tension n*V2 (figure 3), est supérieure à celle de la tension V1. En outre, on prévoit, contrairement aux étapes des figures 6A et 6B, que l'énergie circule du pont en H 120 vers le pont en H 110.

Comme à l'étape de la figure 6A, on applique de manière répétée à la fréquence de découpage, au pont en H 110, la séquence SA décrite ci-dessus en relation avec la figure 4, et, au pont en H 120, la séquence SB décrite ci-dessus en relation avec la figure 5.

Comme les étapes des figures 6A et 6B, l'étape de la figure 6C est mise en œuvre dans le premier mode de fonctionnement. Dans la présente étape, les commutations d'entrée tB2 et de sortie tB3 de l'état P de la séquence SB se produisent respectivement aux états N en P de la séquence SA. Les commutations d'entrée tB4 et de sortie tB1 de l'état N de la séquence SB se produisent respectivement aux états P et N de la séquence SA.

Les instants de commutation tB1, tB2, tB3 et tB4 de la séquence SB sont déterminés par rapport aux instants tA1 et tA2 de la séquence SA par les deux paramètres x1 et y1 définis en relation avec la figure 6B. Ainsi, selon des modes de réalisation du premier aspect, les paramètres x1 et/ou y1 ont des valeurs égales à celles des paramètres respectifs x et/ou y.

De préférence, l'instant de commutation tA1 constitue l'instant de référence. Les autres instants de commutation des séquences SA et SB sont définis par les déphasages $\varphi1$ et $\varphi2$ et les rapport cycliques D1 et D2 définis en relation avec la figure 6A.

La tension V135 prend les valeurs -V1-n*V2, -V1, V1-n*V2, n*V2-V1, V1, et V1+n*V2 lorsque les états respectifs des séquences S110 et S120 sont, respectivement, N et P, N et O, P et P, N et N, P et O, et P et N, à savoir, respectivement, entre les instants tB2 et tA1, tB1 et tB2, tA1 et tB3, tA2 et tB1, tB3 et tB4, et TB4 et TA2.

Selon un mode de réalisation, l'écart de phase dϕ entre les séquences SA et SB prend, à l'étape de la figure 6C, une valeur opposée à celle de ce déphasage à l'étape de la figure 6A. Autrement dit, le déphasage prend des signes opposés pour les deux sens opposés de circulation d'énergie entre les ponts.

Il en résulte que, pour les mêmes valeurs de tension aux bornes des ponts que celles de l'étape de la figure 6A, la puissance transférée du pont en H 110 au pont en H 120 prend, à l'étape de la figure 6C, une valeur algébrique opposée à celle de la puissance transférée à l'étape de la figure 6A. On peut alors sélectionner un sens de circulation parmi les deux sens opposés de circulation, en fonction du signe de la consigne de puissance. Autrement dit, pour chaque valeur de puissance transmise dans un sens entre les ponts en appliquant les séquences SA et SB ayant entre elles une valeur du déphasage dϕ, on peut obtenir de manière simple une même valeur de puissance transmise dans l'autre sens en prenant la valeur opposée du déphasage dϕ.

Les déphasages $\varphi1$ et $\varphi2$, et les rapports cycliques D1 et D2, sont alors donnés par les égalités (4) suivantes :
[Math 4]

$$
\begin{aligned}
D1 &= 0{,}5 \\
\varphi1 &= \frac{\pi}{2} \\
D2 &= x + y \\
\varphi2 &= 2\pi\left(\frac{y-x}{2}\right)
\end{aligned}
\qquad (4)
$$

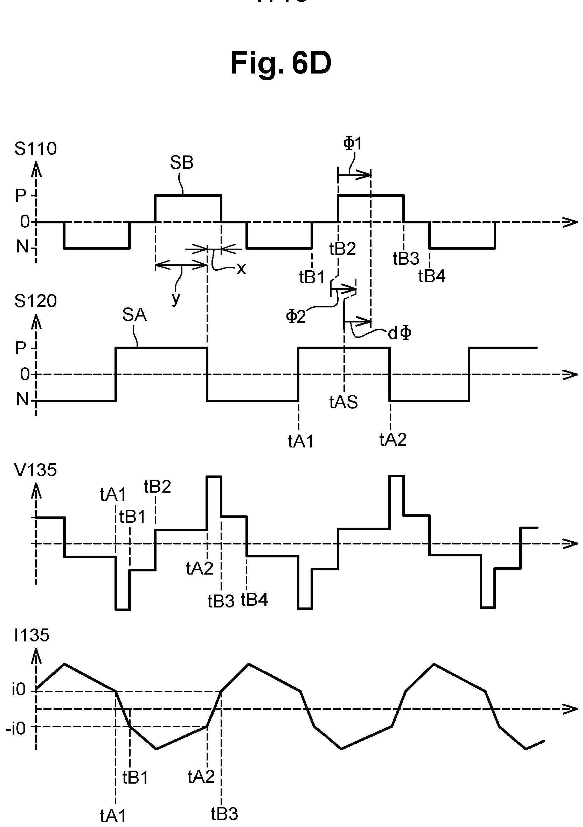

A l'étape de la figure 6D, comme à l'étape de la figure 6B, la valeur de tension n*V2 (figure 3), est inférieure à celle de la tension V1. En outre, on prévoit, comme à l'étape de la figure 6C, que l'énergie circule du pont en H 120 vers le pont en H 110.

Comme à l'étape de la figure 6B, on applique de manière répétée à la fréquence de découpage, au pont en H 110, la séquence SB décrite ci-dessus en relation avec la figure 5, et, au pont en H 120, la séquence SA décrite ci-dessus en relation avec la figure 4.

Ainsi, dans les étapes des figures 6A à 6D, les ponts en H 110 et 120 sont commutés respectivement selon les séquences SA et SB lorsque le rapport V1/V2 entre les tensions V1 et V2 est inférieur au rapport de transformation n, et selon les séquences SB et SA lorsque le rapport V1/V2 est supérieur au rapport de transformation. Le rapport V1/V2 est par exemple obtenu à partir des valeurs mesurées telles que décrites en relation avec la figure 2.

Les instants de commutation tB1, tB2, tB3 et tB4 de la séquence SB sont déterminés par rapport aux instants tA1 et tA2 de la séquence SA par les deux paramètres x et y définis en relation avec la figure 6A.

De même que les étapes des figures 6A, 6B et 6C, l'étape de la figure 6D est mise en œuvre dans le premier mode de fonctionnement. Dans la présente étape, les commutations d'entrée tB2 et de sortie tB3 de l'état P de la séquence SB se produisent respectivement aux états P en N de la séquence SA. Les commutations d'entrée tB4 et de sortie tB1 de l'état N de la séquence SB se produisent respectivement aux états N et P de la séquence SA.

De préférence, l'instant de commutation tA1 constitue l'instant de référence. Les autres instants de commutation des séquences SA et SB sont définis par les déphasages $\varphi1$ et $\varphi2$ (définis en relation avec la figure 6B) et les rapports cycliques D1 et D2 (définis en relation avec la figure 6A).

La tension V135 prend les valeurs -V1-n*V2, -n*V2, n*V2-V1, V1-n*V2, n*V2, et V1+n*V2 lorsque les états respectifs des séquences S120 et S110 sont, respectivement, N et P, N et O, P et P, N et N, P et O, et P et N, à savoir, respectivement, entre les instants tA1 et tB1, tB1 et tB2, tB4 et tA1, tB2 et tA2, tB3 et tB4, et TA2 et TB3.

De préférence, on obtient les instants de commutation des séquences SA et SB de l'étape de la figure 6D :

- à partir des paramètres x et y de l'étape de la figure 6A, de manière similaire à celle décrite pour obtenir les séquences SA et SB de l'étape de la figure 6C à partir des paramètres x1 et y1 de l'étape de la figure 6B ; et/ou
- à partir des paramètres x1 et y1 de l'étape de la figure 6C, de manière similaire à celle décrite pour obtenir les séquences SA et SB de l'étape de la figure 6B à partir des paramètres x et y de la figure 6A.

Les déphasages $\varphi1$ et $\varphi2$, et les rapports cycliques D1 et D2, sont donnés par les égalités (5) suivantes :
[Math 5]

$$D1 = x + y$$
$$\varphi1 = 2\pi\left(\frac{x+y}{2}\right)$$
$$D2 = 0,5 \qquad (5)$$
$$\varphi2 = 2\pi\left(-\frac{1}{4} + y\right)$$

Les étapes des figures 6A à 6D ont été représentées ci-dessus pour des tensions V1 et V2 positives. Cependant, les tensions V1 et V2 peuvent être des grandeurs algébriques. Lorsque les tensions V1 et/ou V2 sont négatives, des étapes similaires à celles des figures 6A à 6D peuvent être obtenues en remplaçant les valeurs des tensions V1 et V2 par leurs valeurs absolues. Pour cela, lorsque les tensions V1 et/ou V2 sont négatives, on permute les états N et P des séquences respectives S110 et/ou S120.

Les étapes des figures 7A à 7D peuvent être mises en œuvre dans un deuxième mode de fonctionnement du convertisseur. Plus précisément, une ou plusieurs des étapes 7A à 7D, par exemple toutes ces étapes, sont mises en œuvre successivement dans le deuxième mode de fonctionnement.

De même que pour les étapes des figures 6A à 6D, les étapes des figures 7A à 7D sont représentées pour des valeurs positives des tensions V1 et V2, cependant, des étapes similaires peuvent être obtenues de manière décrite ci-dessus pour des valeurs négatives des tensions V1 et/ou V2.

A l'étape de la figure 7A, comme à celle de la figure 6A, la valeur de tension n*V2 (figure 3), est supérieure à celle de la tension V1, et on prévoit que l'énergie circule du pont en H 110 vers le pont en H 120.

Comme à l'étape de la figure 6A, on applique aux ponts en H 110 et 120, de manière répétée à la fréquence de découpage, les séquences respectives SA et SB décrites ci-dessus en relation avec les figures 4 et 5.

Comme mentionné ci-dessus, la présente étape est mise en œuvre dans le deuxième mode de fonctionnement du convertisseur. Dans ce deuxième mode de fonctionnement, les commutations d'entrée et sortie d'un état donné de la séquence SB parmi les états N et P se produisent à un même état de la séquence SA. Dans la présente étape, les commutations d'entrée tB2 et de sortie tB3 de l'état P de la séquence SB se produisent à l'état N de la séquence SA. Les commutations d'entrée tB4 et de sortie tB1 de l'état N de la séquence SB se produisent à l'état P de la séquence SA.

Les instants de commutation tB1, tB2, tB3 et tB4 de la séquence SB sont déterminés par rapport aux instants tA1 et tA2 de la séquence SA par deux paramètres x' et y'. Les paramètres x' et y' sont compris entre 0 et 0,5 et correspondent chacun à une fraction du temps de cycle Tc de découpage. La durée y'*Tc (représentée par y') sépare chaque instant tB2 de l'instant tB1 suivant, et la durée x'*Tc (représentée par x') sépare chaque instant tB3 de l'instant TA2 suivant.

Les paramètres x' et y' sont, de préférence, calculés de manière similaire à celle décrite en relation avec la figure 6A, à savoir, plus préférentiellement :

- sur la base d'une égalité entre valeurs modélisées, calculées à partir du modèle du convertisseur et à partir de valeurs des tensions aux bornes des ponts, d'un courant dans le transformateur à des instants de commutation des séquences SA et SB (par exemple les instants tA1 et tB3) ; et/ou
- sur une égalité entre la puissance représentée par la consigne P* et la valeur modélisée P de puissance correspondante, calculée à partir du modèle du convertisseur et à partir de valeurs des tensions V1 et V2 aux bornes des ponts.

Les séquences SA et SB sont ensuite générées à partir des paramètres x' et y' obtenus et appliqués aux ponts en H 110 et 120. Les séquences SA et SB ont entre elles le déphasage dφ, décrit ci-dessus, entre l'instant tAS et l'instant tBS.

De préférence, les instants de commutation des séquences SA et SB sont définis par rapport à l'instant de référence tA1 par les déphasages $\varphi1$ et $\varphi2$ et les rapports cycliques D1 et D2 définis en relation avec la figure 6A.

Les déphasages $\varphi1$ et $\varphi2$, et les rapports cycliques D1 et D2, sont donnés à partir des paramètres x' et y' par les égalités (6) suivantes :

[Math 6]

$$D1 = 0,5$$
$$\varphi1 = \pi/2$$
$$D2 = y' \qquad (6)$$
$$\varphi2 = 2\pi\left(\frac{1}{2} - x' - \frac{y'}{2}\right)$$

La tension V135 prend les valeurs -V1, V1-n*V2, n*V2-V1, et V1 lorsque les états respectifs des séquences S110 et S120 sont, respectivement, N et O, P et P, N et N, P et O, à savoir, respectivement, entre les instants tB3 et tB4, tB2 et tA2, tB4 et tA1, tB1 et tB2. Les états respectifs des séquences S110 et S120 sont également, respectivement, N et O, P et O entre les instants, respectivement tB1 et tA1, tB3 et tA2.

Ainsi, dans le présent exemple du deuxième mode de fonctionnement, par rapport à l'exemple du premier mode de fonctionnement de la figure 6A, on a remplacé les états respectifs N et P, P et N des séquences S110 et S120 entre les instants tA1 et tB1 (figure 6A) et tA2 et tB3 (figure 6A), par les états N et O, P et O. Ceci provient du fait que l'état P de la séquence SB commence après l'instant tA1 et se termine avant l'instant tA2, et que l'état N de la séquence SB commence après l'instant tA2 et se termine avant l'instant tA1.

Dans cet exemple, il en résulte que, entre les instants tA1 et tB1 de l'étape de la figure 7A, le courant I135 varie en sens opposé du sens de variation du courant I135 entre les instants tB1 et tA1 de l'étape de la figure 6A. De la même manière, entre les instants tB3 et tA2 de l'étape de la figure 7A, le courant I135 varie en sens opposé du sens de variation du courant I135 entre les instants tA2 et tB3 l'étape de la figure 6A.

Il en résulte que la puissance transférée par le convertisseur est relativement faible dans le deuxième mode de fonctionnement et relativement élevée dans le premier mode de fonctionnement. Cette différence, avantageuse, entre puissances transférées entre le premier et le deuxième mode de fonctionnement est similaire pour toutes les étapes des figures 6A à 6D et 7A à 7D. Cette différence entre modes de fonctionnement, et un exemple d'utilisation avantageuse de cette différence, sont illustrés ci-après dans l'exemple particulier de la figure 8.

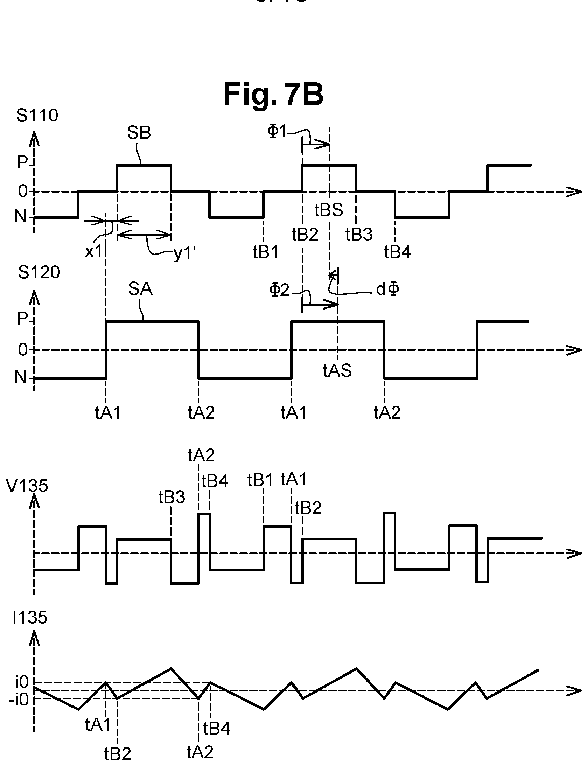

A l'étape de la figure 7B, comme à celle de la figure 6B, la valeur de tension n*V2 (figure 3), est inférieure à celle de la tension V1, et on prévoit que l'énergie circule du pont en H 110 vers le pont en H 120.

A la différence de l'étape de la figure 7A, on applique de manière répétée à la fréquence de découpage, au pont en H 110, la séquence SB et, au pont en H 120, la séquence SA.

Comme l'étape de la figure 7A, l'étape de la figure 7B est mise en œuvre dans le deuxième mode de fonctionnement, dans lequel les commutations d'entrée et sortie d'un état donné de la séquence SB parmi les états N et P se produisent à un même état de la séquence SA. Dans la présente étape, les commutations d'entrée tB2 et de sortie tB3 de l'état P de la séquence SB se produisent à l'état P de la séquence SA. Les commutations d'entrée tB4 et de sortie tB1 de l'état N de la séquence SB se produisent à l'état N de la séquence SA.

Les instants de commutation tB1, tB2, tB3 et tB4 de la séquence SB sont déterminés par rapport aux instants tA1 et tA2 de la séquence SA par deux paramètres xl' et y1' compris entre 0 et 0,5 et correspondant chacun à une fraction du temps de cycle Tc de découpage. La durée x1'*Tc (représentée par x1') sépare chaque instant tA1 de l'instant tB2 suivant, et la durée y1'*Tc (représentée par y1') sépare chaque instant tB2 de l'instant TB3 suivant.

De préférence, les instants de commutation sont définis par rapport à l'instant de référence tA1 par les déphasages $\varphi\mathbf{1}$ et $\varphi\mathbf{2}$ et les rapports cycliques D1 et D2, de la même manière qu'à l'étape de la figure 6B.

La tension V135 prend les valeurs -n*V2, n*V2-V1, V1-n*V2, n*V2, lorsque les états respectifs des séquences S120 et S110 sont, respectivement, N et O, P et P, N et N, P et O, à savoir, respectivement, entre les instants tB3 et tB4, tA2 et tB1, tA1 et tB3, tB1 et tB2. Les séquences S120 et S110 prennent respectivement les états N et O, P et O, entre les instants, respectivement, tA2 et tB4, et TA1 et TB2.

De préférence, les paramètres xl' et/ou y1' dans la présente étape sont obtenus, selon le premier aspect, à partir des paramètres x' et y' de l'étape de la figure 7A de la même manière que pour obtenir les paramètres x1 et y1 de l'étape de la figure 6B.

En particulier, selon des modes de réalisation du premier aspect, on donne aux paramètres xl' et/ou y1' les mêmes valeurs que les paramètres respectifs x' et/ou y' de l'étape de la figure 7A. Ceci est effectué, de préférence, pour un même rapport P*/(V1*V2) qu'à l'étape de la figure 7A, et pour une valeur du rapport V1/(n*V2) inverse de celle de l'étape de la figure 7A. Il en résulte les mêmes avantages de simplification que pour l'étape de la figure 6B. En particulier, on obtient facilement les mêmes valeurs souhaitées i0 du courant I135 aux instants tB2 et tA2, ainsi qu'aux valeurs tA1 et tB4. Plus précisément, on obtient l'égalité souhaitée entre les valeurs absolues du courant I135 aux instants tB2, tA2, tB1 et tB2.

Lorsque les valeurs des paramètres x1' et y1' sont égales à celles des paramètres x' et y', les déphasages $\varphi\mathbf{1}$ et $\varphi\mathbf{2}$ et les rapports cycliques D1 et D2 sont donnés par les égalités (7) suivantes :

[Math 7]

$$D1 = y'$$
$$\varphi1 = 2\pi \left(\frac{y'}{2}\right)$$
$$D2 = 0,5 \qquad (7)$$
$$\varphi2 = 2\pi \left(\frac{1}{4} - x'\right)$$

Dans des variantes de réalisation selon le premier aspect, on calcule, à l'étape de la figure 7B, les paramètres xl' et/ou y1' d'une manière similaire à celle décrite en relation avec la figure 6A, et, à l'étape de la figure 7A, on donne aux paramètres x' et/ou y' les valeurs respectives des paramètres x1' et/ou y1' calculés.

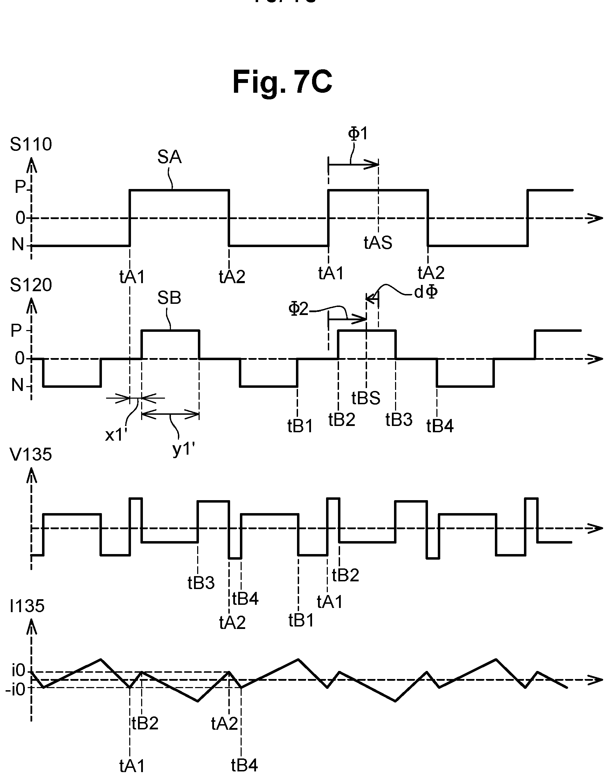

A l'étape de la figure 7C, comme à l'étape de la figure 6C, la valeur de tension n*V2 (figure 3), est supérieure à celle de la tension V1 et on prévoit que l'énergie circule du pont en H 120 vers le pont en H 110.

On applique de manière répétée à la fréquence de découpage, au pont en H 110, la séquence SA décrite ci-dessus en relation avec la figure 4, et, au pont en H 120, la séquence SB décrite ci-dessus en relation avec la figure 5.

L'étape de la figure 7C est mise en œuvre dans le deuxième mode de fonctionnement. Dans la présente étape, les commutations d'entrée tB2 et de sortie tB3 de l'état P de la séquence SB se produisent à l'état P de la séquence SA. Les commutations d'entrée tB4 et de sortie tB1 de l'état N de la séquence SB se produisent à l'état N de la séquence SA.

Les instants de commutation tB1, tB2, tB3 et tB4 de la séquence SB sont déterminés par rapport aux instants tA1 et tA2 de la séquence SA par les deux paramètres x1' et y1' définis en relation avec la figure 7B. Ainsi, selon des modes de réalisation du premier aspect, les paramètres x1' et/ou y1' ont des valeurs égales à celles des paramètres respectifs x' et/ou y'.

De préférence, l'instant de commutation tA1 constitue l'instant de référence. Les autres instants de commutation des séquences SA et SB sont définis par les déphasages $\varphi1$ et $\varphi2$ et les rapport cycliques D1 et D2, définis en relation avec la figure 6A.

La tension V135 prend les valeurs -V1, V1-n*V2, n*V2-V1, et V1 lorsque les états respectifs des séquences S110 et S120 sont, respectivement, N et O, P et P, N et N, P et O, à savoir, respectivement, entre les instants tB1 et tB2, tA1 et tB3, tA2 et tB1, et tB3 et tB4. Les séquences S120 et S110 prennent respectivement les états P et O, N et O, entre les instants, respectivement, tA1 et tB2, TA2 et TB4.

Selon un mode de réalisation, l'écart de phase dϕ entre les séquences SA et SB prend, à l'étape de la figure 7C, une valeur opposée à celle de ce déphasage à l'étape de la figure 7A.

Les déphasages $\varphi1$ et $\varphi2$, et les rapports cycliques D1 et D2, sont alors donnés par les égalités (8) suivantes :
[Math 8]

$$D1 = 0,5$$
$$\varphi1 = \frac{\pi}{2}$$
$$D2 = y' \qquad (8)$$
$$\varphi2 = 2\pi \left(x' + \frac{y'}{2}\right)$$

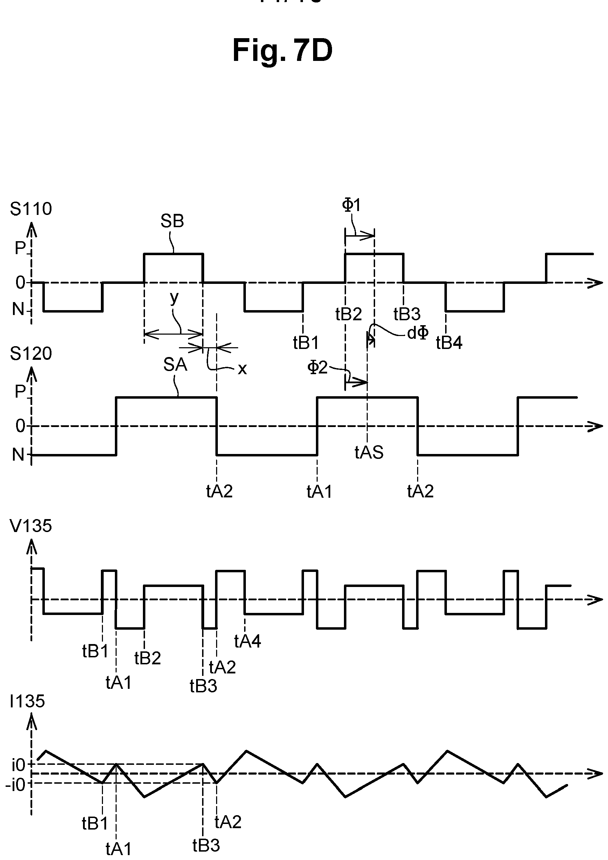

A l'étape de la figure 7D, comme à l'étape de la figure 6D, la valeur de tension n*V2, est inférieure à celle de la tension V1 et on prévoit que l'énergie circule du pont en H 120 vers le pont en H 110.

On applique, de manière répétée à la fréquence de découpage, au pont en H 110, la séquence SB décrite ci-dessus en relation avec la figure 5, et, au pont en H 120, la séquence SA décrite ci-dessus en relation avec la figure 4.

Les instants de commutation tB1, tB2, tB3 et tB4 de la séquence SB sont déterminés par rapport aux instants tA1 et tA2 de la séquence SA par les deux paramètres x' et y' définis en relation avec la figure 7A.

Comme les étapes des figures 7A, 7B et 7C, l'étape de la figure 7D est mise en œuvre dans le deuxième mode de fonctionnement. Dans la présente étape, les commutations d'entrée tB2 et de sortie tB3 de l'état P de la séquence SB se produisent à l'état P de la séquence SA. Les commutations d'entrée tB4 et de sortie tB1 de l'état N de la séquence SB se produisent à l'état N de la séquence SA.

De préférence, l'instant de commutation tA1 constitue l'instant de référence. Les autres instants de commutation des séquences SA et SB sont définis par les déphasages $\varphi1$ et $\varphi2$ et les rapports cycliques D1 et D2.

La tension V135 prend les valeurs -n*V2, n*V2-V1, V1-n*V2, et n*V2 lorsque les états respectifs des séquences S120 et S110 sont, respectivement, N et O, P et P, N et N, et P et O, à savoir, respectivement, entre les instants tB1 et tB2, tB4 et tA1, tB2 et tA2, et tB3 et tB4. Les séquences S120 et S110 prennent respectivement les états N et O, P et O, entre les instants, respectivement, tB1 et tA1, TB3 et TA2.

De préférence, on obtient les instants de commutation des séquences SA et SB de l'étape de la figure 7D :

- à partir des paramètres x' et y' de l'étape de la figure 7A, de manière similaire à celle décrite pour obtenir les séquences SA et SB de l'étape de la figure 6C à partir des paramètres x1 et y1 de l'étape de la figure 6B ; et/ou
- à partir des paramètres x1' et y1' de l'étape de la figure 7C, de manière similaire à celle décrite pour obtenir les séquences SA et SB de l'étape de la figure 6B à partir des paramètres x et y de la figure 6A.

Les déphasages $\varphi 1$ et $\varphi 2$, et les rapports cycliques D1 et D2, sont donnés par les égalités par les égalités (9) suivantes :
[Math 9]

$$
\begin{aligned}
D1 &= y' \\
\varphi 1 &= 2\pi \left(\frac{y}{2}\right) \\
D2 &= 0{,}5 \\
\varphi 2 &= 2\pi \left(-\frac{1}{4} - x' + y'\right)
\end{aligned}
\qquad (9)
$$

La figure 8 représente, de manière schématique, un exemple d'allure d'une puissance en fonction de paramètres de commande. Plus précisément :

- une courbe 810 représente l'allure d'une puissance P transférée à l'étape 6A par le convertisseur du pont en H 110 au pont en H 120 en fonction du paramètre x ; et
- une courbe 810 représente l'allure d'une puissance P transférée à l'étape 7A par le convertisseur du pont en H 110 au pont en H 120 en fonction du paramètre x'.

Selon un deuxième aspect, la fréquence de découpage, à laquelle les séquences SA et SB sont répétées, est choisie préalablement aux calculs des instants de commutation des séquences SA et SB. Le deuxième aspect peut être prévu en l'absence du premier aspect, par exemple seules les étapes 6A et/ou 7A sont mises en œuvre, ou, encore par exemple, les paramètres x1 et y1 et/ou x1' et y1' sont calculés indépendamment des paramètres x et y et/ou x1' et y1'. Le deuxième aspect peut également être combiné au premier aspect, la fréquence de découpage étant alors choisie préalablement au calcul des paramètres x et y et/ou x' et y', puis les paramètres x1 et y1 et/ou x1' et y1' prenant les valeurs, respectivement, des paramètres x et y et/ou x' et y'.

On peut alors déterminer, pour la fréquence de découpage prédéfinie, la valeur modélisée P selon un modèle du convertisseur de la puissance transférée par le convertisseur du pont en H 110 vers le pont en H 120. La puissance représentée en fonction des paramètres x, x' correspond à cette valeur modélisée P.

En d'autres termes, selon ce deuxième aspect, on impose une fréquence de découpage commune, c'est-à-dire une fréquence de commutation identique pour tous les interrupteurs des deux ponts en H.

A la différence de la solution décrite dans l'article Jauch et al. mentionné plus haut, le convertisseur des solutions décrites dans la présente description comporte deux ponts en H intégralement commandables (possédant des interrupteurs dans les quatre branches) et non un pont dont seul un demi-pont est commandable côté AC. Mais surtout, la présente description offre une solution permettant, en fixant la fréquence de découpage, c'est-à-dire en rendant constante la fréquence de découpage des deux ponts, d'obtenir les instants de commutation à partir d'une détermination analytique des paramètres x et y en fonction des tensions V1 et V2.

A partir de la consigne de puissance P* définie en relation avec la figure 2, par exemple variant de la manière représentée en figure 3, on donne au paramètre x, x' une valeur respective x(P*), x'(P*) (dans l'exemple représenté, le paramètre x prend la valeur x(P*)). La valeur x(P*) est celle du paramètre x pour laquelle la puissance modélisée P est égale à la puissance représentée par la consigne P*. On donne alors au paramètre y la valeur pour laquelle les courants modélisés à des instants de commutations des deux séquences SA et SB sont égaux.

De préférence, dans le modèle de convertisseur utilisé, l'inductance de fuite du transformateur est une constante L indépendante du courant, les commutations sont instantanées, les chutes de tension sont nulles dans les interrupteurs à l'état passant et dans les connexions, et les enroulements du transformateur ont des résistances nulles.

Il résulte de ce modèle que, dans le premier mode de fonctionnement, le paramètre y est calculé à partir du paramètre x et de la relation (10) suivante :

[Math 10]

$$y = \frac{1}{2}r_v(1 - 2x) \qquad (10)$$

où $r_v$ représente la valeur du rapport V1/(n*V2) décrit en relation avec la figure 6B.

La puissance transmise par le convertisseur en moyenne pendant le temps de cycle Tc est donnée par la relation (11) suivante :

[Math 11]

$$P = \frac{V_{v1}nV_{v2}(x - 2x^2 + y - 2y^2)}{2fL} \qquad (11)$$

où f représente la fréquence de découpage, et $V_{v1}$ et $V_{v2}$ représentent des valeurs respectives des tensions V1 et V2.

Il résulte des relations (10) et (11), que la puissance P vérifie la relation (12) suivante :

[Math 12]

$$r_p = -\frac{n}{2fL}(ax^2 + bx + c) \qquad (12)$$

où $r_p$ représente la valeur d'un rapport P/(V1*V2) entre la valeur P de puissance modélisée et les tensions V1 et V2, et où a, b, et c représentent des coefficients calculés à partir des relations (13) suivantes :

[Math 13]

$$\begin{aligned} a &= 2 + 2r_v^2 \\ b &= -1 + r_v - 2r_v^2 \\ c &= -\frac{r_v}{2} + \frac{r_v^2}{2} \end{aligned} \qquad (13)$$

La valeur choisie du paramètre x est celle qui vérifie l'équation P* = P, qui, compte tenu de la relation (13), correspond à l'équation (14) suivante :

[Math 14]

$$ax^2 + bx + c + \frac{2fL}{n}r_p^* = 0 \qquad (14)$$

où $r_p^*$ représente la valeur du rapport P*/(V1*V2) décrit en relation avec la figure 6B. L'équation (14) correspond à une équation du second degré.

Lorsque la consigne P* est inférieure à une valeur maximale P1H, l'équation (14) a deux solutions. On choisit comme valeur du paramètre x la plus petite des deux solutions. Ce choix permet, par rapport au choix de la plus grande des deux solutions, de limiter la valeur du courant I135 dans le transformateur, ce qui limite divers problèmes de dimensionnement du transformateur, de pertes d'énergie dans le transformateur, et/ou de saturation d'éléments ferromagnétiques du transformateur.

On calcule donc la valeur du paramètre x par la relation (15) suivante :

[Math 15]

$$x = \frac{-b - \sqrt{\Delta}}{2a} \qquad (15)$$

où $\Delta$ représente une valeur calculée par la relation (16) suivante :

[Math 16]

$$\Delta = b^2 - 4a\left(c + \frac{2fL}{n}r_p^*\right) \qquad (16)$$

La valeur $\Delta$ étant positive lorsque la consigne P* est inférieure à la valeur P1H donnée par la relation (17) suivante :
[Math 17]

$$P1H = V_{v1}V_{v2}\frac{n}{2fL}\left(\frac{b^2}{4a} - c\right) \qquad (17)$$

La valeur du paramètre x est comprise entre 0 et 0,5. La solution à l'équation 15 satisfait cette condition lorsque la consigne P* est supérieure à une valeur minimale P1L atteinte pour la valeur nulle du paramètre x. La valeur minimale P1L peut être calculée par la relation (18) suivante :
[Math 18]

$$P1L = -V_{v1}V_{v2}\frac{n}{2fL}c \qquad (18)$$

Les valeurs P1L et P1H constituent des valeurs respectivement maximale et minimale transférables par le convertisseur dans le premier mode de fonctionnement lorsque les tensions V1 et V2 ont prennent les valeurs $V_{V1}$ et $V_{V2}$. Pour toute valeur de la consigne P* située entre les valeurs maximale P1H et minimale P1L, on calcule le paramètre x à partir des relations (13), (14) et (16), de la fréquence de découpage définie préalablement, et des valeurs des tensions V1 et V2. Les relations (13), (14) et (16) fournissent une même valeur du paramètre x, pour différentes valeurs des tensions V1 et V2 et de la consigne P*, lorsque le rapport $r_p^*$ prend une même valeur et le rapport $r_v$ prend une même valeur.

Le paramètre y est calculé ensuite par la relation (10), puis les instants des commutations des séquences SA et SB sont déterminées de la manière exposée ci-dessus en relation avec les figures 6A à 6D. On applique les séquences SA et SB aux ponts 110 et 120, ce qui provoque le transfert entre ponts d'une puissance de préférence sensiblement égale, plus préférentiellement égale, à la consigne P*.

Dans le deuxième mode de fonctionnement, les paramètres x' et y' sont calculés de manière similaire à celle décrite ci-dessus pour le premier mode de fonctionnement. La puissance P vérifie la relation (19) suivante :
[Math 19]

$$r_p = \frac{n}{4fL}r_v\left(a'x'^2 + b'x' + c'\right) \qquad (19)$$

où les coefficients a', b', et c' sont calculés à partir des relations (20) suivantes :
[Math 20]

$$\begin{aligned} a' &= 4(2 - r_v) \\ b' &= 4r_v - 6 \qquad (20) \\ c' &= 1 - r_v \end{aligned}$$

Comme indiqué ci-dessus, la valeur choisie du paramètre x' est celle qui vérifie l'équation P* = P, qui correspond à l'équation (21) suivante :
[Math 21]

$$a'x'^2 + b'x' + c' - \frac{4fL}{n}\frac{1}{r_v}r_p^* = 0 \qquad (21)$$

Lorsque la consigne P* est supérieure à une valeur minimale P2L, l'équation (21) a deux solutions. On choisit comme valeur du paramètre x' la plus petite des deux solutions. Comme dans le premier mode de fonctionnement, ce choix permet, par rapport au choix de la plus grande des deux solutions, de limiter la valeur du courant I135 dans le transformateur.

On calcule alors la valeur du paramètre x', solution de l'équation (21), en utilisant la relation (22) suivante :
[Math 22]

$$x = \frac{-b' - \sqrt{\Delta'}}{2a'} \qquad (22)$$

où $\Delta'$ représente une valeur calculée par la relation (23) suivante :
[Math 23]

$$\Delta' = b'^2 - 4a'\left(c' - \frac{4fL}{n}\frac{1}{r_v}r_p^*\right) \qquad (23)$$

La valeur $\Delta$ est positive lorsque la puissance P* est inférieure à la valeur P2L donnée par la relation (24) suivante :
[Math 24]

$$P2L = -V_1^2\frac{1}{4fL}\left(\frac{b'^2}{4a'} - c'\right) \qquad (24)$$

De plus, la valeur du paramètre x est comprise entre 0 et 0,5. La solution à l'équation (21) satisfait cette condition lorsque la consigne P* est inférieure à une valeur maximale P2H atteinte pour la valeur nulle du paramètre x'. La valeur minimale P2H peut être calculée par la relation (25) suivante :
[Math 25]

$$P2H = V_1^2\frac{1}{4fL}c' \qquad (25)$$

Par application aux relations (25) et (18) des relations respectives (13) et (20) vérifiées par les coefficients respectifs c et c', on obtient l'égalité P1L = P2H pour des mêmes valeurs des tensions V1 et V2 et une même valeur de la fréquence de découpage.

Les instants des commutations des séquences SA et SB sont déterminés de la manière exposée ci-dessus en relation avec les figures 7A à 7D. On applique les séquences SA et SB aux ponts 110 et 120, ce qui provoque le transfert entre ponts d'une puissance de préférence sensiblement égale, plus préférentiellement égale, à la consigne P*.

On a ainsi, obtenu, dans l'exemple de la figure 8, un transfert de puissance entre les ponts H 110 et 120 correspondant à la consigne de puissance P*.

Selon un mode de réalisation, la fréquence de découpage f, commune aux répétitions des séquences SA et SB, a une valeur prédéfinie constante. A titre d'exemple, la fréquence de découpage est comprise entre 20 kHz et 150 kHz, de préférence égale à environ 100 kHz, plus préférentiellement égale à 100 kHz.

Selon un autre mode de réalisation, la fréquence f est calculée, préalablement au calcul des valeurs des paramètres x et y et/ou x' et y', à partir des valeurs des tensions V1 et V2 et de la consigne de puissance P*. Les valeurs des paramètres x et y et/ou x' et y' sont calculées ensuite, de préférence de la manière décrite ci-dessus.

Pour cela, dans le premier mode de fonctionnement, de préférence, on calcule les valeurs de puissance minimale P1L et maximale P1H à partir des valeurs des tensions V1 et V2 et de la consigne P. On choisit alors la fréquence de découpage pour laquelle la consigne P* est située de manière prédéfinie entre les valeurs P1L et P1H, de préférence la fréquence pour laquelle la consigne P* est égale à la moyenne des valeurs P1L et P1H, ou par exemple à une moyenne pondérée entre les valeurs P1L et P1H.

Dans l'exemple du modèle décrit ci-dessus, on calcule les coefficients a, b, c à partir des tensions V1 et V2 et de la consigne P* en utilisant les relations (13), puis on calcule la fréquence de découpage f pour laquelle l'égalité (26) suivante est vérifiée :

[Math 26]

$$P^* = \frac{1}{2}(P1L + P1H) \qquad (26)$$

dans laquelle les valeurs P1L et P1H sont fournies en fonction de la fréquence f respectivement par les relations (18) et (17). Autrement dit, l'égalité (26) est une équation dont une solution est la fréquence f. Cette équation peut être résolue par une relation algébrique fournissant la fréquence f en fonction des valeurs des tensions V1 et V2 et de la consigne P*.

Dans le deuxième mode de fonctionnement, on calcule la fréquence de découpage de manière similaire à celle décrite ci-dessus pour le premier mode de fonctionnement. Par exemple en utilisant les relations (20), (24) et (25), de manière à obtenir l'égalité (27) suivante, qui constitue une équation :

[Math 27]

$$P^* = \frac{1}{2}(P2L + P2H) \qquad (27)$$

On peut définir, pour la fréquence de découpage, une plage de valeurs entre une fréquence minimum et une fréquence maximum. On calcule la valeur de fréquence de découpage f vérifiant l'égalité (26) ou (27). Lorsque la valeur de fréquence ainsi calculée est supérieure à la fréquence maximum, on donne à la fréquence de découpage la valeur de la fréquence maximum. Lorsque la valeur de fréquence calculée est inférieure à la fréquence minimum, on donne à la fréquence de découpage la valeur de la fréquence minimum. Lorsque la valeur de fréquence calculée est comprise dans la plage, on choisit cette valeur comme valeur de la fréquence de découpage.

Autrement dit, la consigne de puissance est alors située au milieu d'une plage modélisée des valeurs de puissance transférables par le convertisseur.

En pratique, après application des séquences SA et SB, la puissance transférée peut différer de la consigne P*. La consigne de puissance P* peut alors être ajustée, par exemple par une boucle de régulation, de manière à obtenir le fonctionnement souhaité du convertisseur, par exemple à obtenir la fonction PFC souhaitée et/ou à obtenir que la puissance fournie par le convertisseur corresponde à la moyenne souhaitée sur une alternance de la tension. Le fait de situer la consigne de puissance au milieu de la plage modélisée des puissances transférables permet d'éviter divers problèmes de fonctionnement de la boucle de régulation afin d'apporter de la robustesse au fonctionnement du convertisseur.

Selon encore d'autres modes de réalisation, en dehors du deuxième aspect, les étapes de la figure 6A et/ou 7A peuvent être mises en œuvre sans choisir la fréquence de découpage préalablement au calcul des paramètres x et y et/ou x' et y', c'est-à-dire sans choisir la fréquence de découpage f préalablement au calcul des instants de commutation des séquences SA et SB.

Par exemple, on pourrait prévoir, dans une relation telle que la relation (11) ci-dessus donnant la valeur de puissance modélisée, de donner au paramètre x et/ou y une valeur dépendant de la fréquence de découpage f par une relation prédéfinie. On rechercherait alors simultanément la fréquence f et le paramètre x et/ou y pour lesquels la puissance modélisée et la puissance fournie sont égales. Cependant, il serait alors difficile, voire impossible, d'obtenir la fréquence f et les paramètres x et y par des relations algébriques telles que les relations (13), (15), (16). Il faudrait alors recourir à des moyens de résolution numérique, par exemple par itérations successives.

En comparaison, selon le deuxième aspect, le fait de définir la fréquence de découpage préalablement au calcul des instants des commutation des séquences SA et SB, permet d'obtenir les paramètres x et y d'une manière particulièrement simple à mettre en œuvre et/ou rapide à exécuter par un circuit de commande tel que le circuit 180 (figure 1).

Le calcul des paramètres x et y a été décrit ci-dessus en utilisant un exemple particulier de modèle du convertisseur. L'homme du métier est en mesure, à partir de cet exemple, d'adapter les étapes de calcul décrites ci-dessus à d'autres modèles du convertisseur, par exemple prenant en compte des résistances.

En particulier, l'homme du métier est en mesure de conserver uniquement les éléments pertinents du modèle de convertisseur qui permettent d'aboutir, une fois que la fréquence de découpage est prédéfinie, à des expressions algébriques fournissant des paramètres de commande tels que les paramètres x et y.

De même, à partir des étapes de calcul décrites ci-dessus, l'homme du métier est en mesure d'obtenir les étapes de calcul basées, à la place de l'égalité souhaitée entre courants dans le transformateur au cours des commutations des deux séquences, sur toute autre relation entre les courants à des instants situés de manière prédéfinie dans les séquences de commutation.

En particulier, l'homme du métier est en mesure de choisir une relation souhaitée entre courants permettant d'aboutir, une fois que la fréquence de découpage est prédéfinie, à des expressions algébriques fournissant des paramètres de commande tels que les paramètres x et y.

La figure 9 représente, de manière schématique et sous forme de chronogrammes, un exemple de commutation d'interrupteurs d'une branche de convertisseur, tels que interrupteurs T11H et T11L du convertisseur 100 de la figure 1. En particulier, la figure 9 représente des allures en fonction du temps t :

- d'un signal S11H de commande de l'interrupteur T11H ;
- d'un signal S11L de commande de l'interrupteur T11L ; et
- d'une tension V11L aux bornes de l'interrupteur T11L.

Chacun des signaux S11H et S11L a un niveau haut et un niveau bas, correspondant à des mises aux états respectifs passant et bloqué de l'interrupteur concerné.

La commutation comprend un temps mort donné de durée DT. La durée DT peut être obtenue de toute manière usuelle d'obtenir une durée de temps mort de commutation. A titre d'exemple, le temps mort a une durée constante prédéfinie comprise entre 5 ns et 200 ns

Avant la commutation, le signal S11H est à son niveau haut, et le signal S11L est à son niveau bas. L'interrupteur T11L est à l'état bloqué. L'interrupteur T11H est à l'état passant et applique une tension, par exemple égale à V1, aux bornes de l'interrupteur T11L.

A un instant t0 de début de commutation, l'interrupteur T11H passe à l'état bloqué. L'instant t0 peut correspondre à l'un des instants de commutation définis ci-dessus pour les séquences SA et SB.

La tension aux bornes de l'interrupteur T11L est initialement égale à V1 au début du temps mort. Cette tension correspond à la charge de divers éléments capacitifs parasites de l'interrupteur T11L. Au cours du temps mort, ces éléments capacitifs sont déchargés par le courant I135 (figure 1) dans l'inductance de fuite 135 (figure 1) du transformateur 130. Plus le courant dans l'inductance de fuite 135 est élevé, plus la tension aux bornes de l'interrupteur T11L diminue rapidement. En outre, plus l'énergie stockée dans l'inductance de fuite 135 est élevée, plus cette diminution est susceptible de durer longtemps.

A un instant t1, la tension V11L s'annule, puis se stabilise à une valeur négative correspondant par exemple, à une tension d'une diode en parallèle de l'interrupteur T11L. La diode est par exemple formée par des régions semiconductrices dopées constituant un transistor à effet de champ compris dans l'interrupteur T11L.

A un instant t2, le temps mort est écoulé, et un basculement du signal T11L de son état bas à son état haut marque la fin de la commutation. L'interrupteur T11L est rendu passant alors que la tension à ses bornes est sensiblement nulle, à une chute de tension dans la diode près. On a ainsi obtenu une commutation de type ZVS, c'est-à-dire une commutation à tension nulle (en anglais "Zero Voltage Switching"). Les commutations de type ZVS permettent de réduire les pertes énergétiques dans les interrupteurs.

Cependant, lorsque le courant dans l'inductance est inférieur à un seuil de courant $I_{ZVS}$, il peut arriver, comme ceci est représenté par des pointillés 610, que les éléments capacitifs parasites ne soient pas complètement déchargés à la fin du temps mort. La détermination du seuil de courant $I_{ZVS}$ peut être calculée, en fonction de valeurs de l'inductance de fuite, des éléments capacitifs parasites des interrupteurs, par toute étape usuelle de calcul d'un seuil de courant au-delà duquel le courant dans l'inductance est suffisant pour obtenir des commutations de type ZVS.

De retour à la figure 8, dans le premier mode de fonctionnement (courbe 810), les valeurs (i0, figures 6A à 6D) du courant I135 communes à des commutations des séquences SA et SB, sont supérieures au seuil $I_{ZVS}$ lorsque le paramètre x est supérieur à une valeur $x_{ZVS}$ De même, dans le deuxième mode de fonctionnement (courbe 820), les valeurs i0 du courant I135 sont supérieures au seuil $I_{ZVS}$ lorsque le paramètre x' est supérieur à une valeur $x'_{ZVS}$.

Les séquences SA et SB obtenues de la manière décrite ci-dessus à partir des tensions V1 et V2 et de la consigne P*, permettent des commutations de type ZVS lorsque la puissance représentée par la consigne P* est comprise :

- dans le premier mode de fonctionnement, entre une valeur minimale $P1L_{ZVS}$ supérieure à la valeur P1L et la valeur maximale P1H ; et
- dans le deuxième mode de fonctionnement, entre la valeur minimale P2L et une valeur maximale $P2H_{ZVS}$ inférieure à la valeur P2H.

Selon un mode de réalisation, la fréquence de fonctionnement est choisie, de préférence avant le calcul des paramètres x et y :

- dans le premier mode de fonctionnement, de sorte que la consigne de puissance P* soit située de manière prédéfinie, par exemple égale à la moyenne, entre les valeurs P1L$_{ZVS}$ et P1H ; et/ou
- dans le deuxième mode de fonctionnement, de sorte que la consigne de puissance P* soit située de manière prédéfinie, par exemple égale à la moyenne, entre les valeurs P2L et P2H$_{ZVS}$.

Autrement dit, la puissance représentée par la consigne P* est située de manière prédéfinie entre :

- la valeur extrémale P1H ou P2L de puissance transférable estimée en fonction des paramètres x et y ; et
- la valeur de puissance modélisée, ou estimée, respectivement P1L$_{ZVS}$ et P2H$_{ZVS}$, pour laquelle la valeur i0 du courant I135 est égale au seuil de courant I$_{ZVS}$.

La fréquence de découpage est donc choisie de sorte que la consigne de puissance est située au milieu de la plage modélisée des puissances transférables par des commutations de type ZVS. Ceci permet, comme exposé ci-dessus, d'éviter divers problèmes de fonctionnement d'une boucle de régulation ajustant la consigne P*, tout en permettant que les commutations soient de type ZVS.

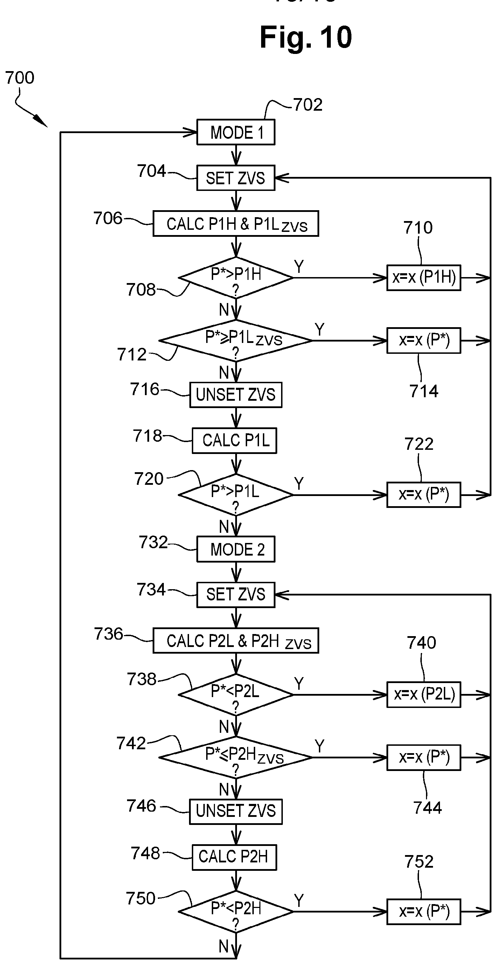

La figure 10 représente, de manière schématique et sous forme de blocs, un exemple d'un mode de réalisation d'un procédé 700 de commande d'un convertisseur du type du convertisseur 100 de la figure 1. Le procédé peut être mis en œuvre, par exemple, par un circuit de commande tel que le circuit 180 (figure 1). Ce procédé est, par exemple, mis en œuvre à l'étape 220 (figure 2) d'obtention des séquences de commutation à partir des tensions V1, V2 et de la consigne P*.

Le procédé 700 est préférentiellement exécuté lorsque la tension V1 et/ou la tension V2 est alternative. Plus préférentiellement, la tension V1 est alternative et la tension V2 est continue, et la consigne P* est calculée de la manière décrite en relation avec la figure 3.

A une étape 702 (MODE 1), le convertisseur passe dans le premier mode de fonctionnement. Après cela, à une étape 704 (SET ZVS), on prévoit que le convertisseur fonctionne de sorte que les commutations soient de type ZVS. Les étapes suivantes du premier mode de fonctionnement sont mises en œuvre, de préférence, pour les valeurs mesurées des tensions V1 et V2 et pour la consigne P*.

A une étape 706 (CALC P1H & P1L$_{ZVS}$), par exemple suivant l'étape 704, on calcule les valeurs P1H et P1L$_{ZVS}$ de la manière décrite ci-dessus en relation avec les figures 8 et 9. Dans un exemple, on prévoit que la fréquence de découpage soit calculée de la manière décrite ci-dessus en fonction des valeurs P1L$_{ZVS}$ et P1H. Dans un autre exemple, la fréquence de découpage est constante.

A une étape 708 (P* > P1H ?) suivant l'étape 706, on compare la consigne de puissance P* à la valeur P1H. Si la consigne P* est supérieure à la valeur P1H (Y), le procédé passe à une étape 710 (x=x(P1H)) à laquelle on choisit, pour le paramètre x, la valeur x(P1H) pour laquelle la puissance P est maximale, c'est-à-dire égale à la valeur P1H. Si la consigne P* est inférieure ou égale à la valeur P1H (N), le procédé passe à une étape 712.

A l'étape 712 (P* > P1L$_{ZVS}$ ?), on compare la consigne de puissance P* à la valeur P1L$_{ZVS}$. Si la consigne P* est supérieure ou égale à la valeur P1L$_{ZVS}$ (Y), le procédé passe à une étape 714 (x = x(P*)) à laquelle on donne au paramètre x la valeur x(P*) pour laquelle la puissance représentée par la consigne P* est égale à la puissance modélisée P, par exemple de la manière décrite en relation avec la figure 8. Si la consigne P* est inférieure à la valeur P1L$_{ZVS}$ (N), le procédé passe à une étape 716.

A l'étape 716 (UNSET ZVS), on prévoit que les conditions pour que les commutations soient de type ZVS ne soient pas complétement remplies.

A une étape 718 (CALC P1L), par exemple suivant l'étape 716, on calcule la valeur P1L. Dans un exemple, on prévoit que la fréquence de découpage soit calculée de la manière décrite ci-dessus en fonction des valeurs P1L et P1H. Dans un autre exemple, la fréquence de découpage reste constante.

A une étape 720 (P*>P1L ?) on compare la consigne P* à la valeur P1L. Si la consigne P* est supérieure à la valeur P1L (Y), le procédé passe à une étape 722 (x = x (P*)) à laquelle on donne au paramètre x la valeur x(P*) pour laquelle la puissance représentée par la consigne P* est égale à la puissance modélisée P, par exemple de la manière décrite en relation avec la figure 8. Si la consigne P* est inférieure ou égale à la valeur P1L (N), le procédé passe à une étape 732.

A titre d'exemple, une fois que la valeur du paramètre x est calculée à l'étape 710, 714 ou 722, le procédé retourne à l'étape 704, pour continuer avec des nouvelles valeurs de la consigne P* et des tensions V1 et V2.

A l'étape 732 (MODE 2), le convertisseur passe dans le deuxième mode de fonctionnement. Après cela, à une étape 734 (SET ZVS), on prévoit que le convertisseur fonctionne de sorte que les commutations soient de type ZVS. Les étapes suivantes du deuxième mode de fonctionnement sont mises en œuvre, de préférence, pour les valeurs mesurées des tensions V1 et V2 et pour la consigne P*.

A une étape 736 (CALC P2L & P2H$_{ZVS}$) , par exemple suivant l'étape 734, on calcule les valeurs P2L et P2H$_{ZVS}$ de la manière décrite ci-dessus en relation avec les figures 8 et 9. Dans un exemple, on prévoit que la fréquence de découpage soit calculée en fonction des valeurs P2H$_{ZVS}$ et P2L. Dans un autre exemple, la fréquence de découpage reste constante et de même valeur qu'au cours du premier mode de fonctionnement.

A une étape 738 (P* < P2L ?) suivant l'étape 736, on compare la consigne de puissance P* à la valeur P2L. Si la consigne P* est inférieure à la valeur P2L (Y), le procédé passe à une étape 740 (x=x(P2L)) à laquelle on choisit, pour le paramètre x, la valeur x(P2L) pour laquelle la puissance P est minimale, c'est-à-dire égale à la valeur P2L. Si la consigne P* est supérieure ou égale à la valeur P2L (N), le procédé passe à une étape 742.

A l'étape 742 (P* < P2H$_{ZVS}$ ?), on compare la consigne de puissance P* à la valeur P2H$_{ZVS}$. Si la consigne P* est inférieure ou égale à la valeur P2H$_{ZVS}$ (Y), le procédé passe à une étape 744 (x = x(P*)) à laquelle on donne au paramètre x la valeur x(P*) pour laquelle la puissance représentée par la consigne P* est égale à la puissance modélisée P, par exemple de la manière décrite en relation avec la figure 8. Si la consigne P* est supérieure à la valeur P2H$_{ZVS}$ (N), le procédé passe à une étape 746.

A l'étape 746 (UNSET ZVS), on prévoit que les conditions pour que les commutations soient de type ZVS ne soient pas complétement remplies.

A une étape 748 (CALC P2H), par exemple suivant l'étape 746, on calcule la valeur P2H. Par exemple, on prévoit que la fréquence de découpage soit calculée de la manière décrite ci-dessus en fonction des valeurs P2H et P2L. En variante, la fréquence de découpage reste constante.

A une étape 750 (P*<P2H ?) on compare la consigne P* à la valeur P2H. Si la consigne P* est inférieure à la valeur P2H (Y), le procédé passe à une étape 752 (x = x (P*)) à laquelle on donne au paramètre x la valeur x(P*) pour laquelle la puissance représentée par la consigne P* est égale à la puissance modélisée P, par exemple de la manière décrite en relation avec la figure 8. Si la consigne P* est inférieure ou égale à la valeur P2H (N), le procédé retourne à l'étape 702.

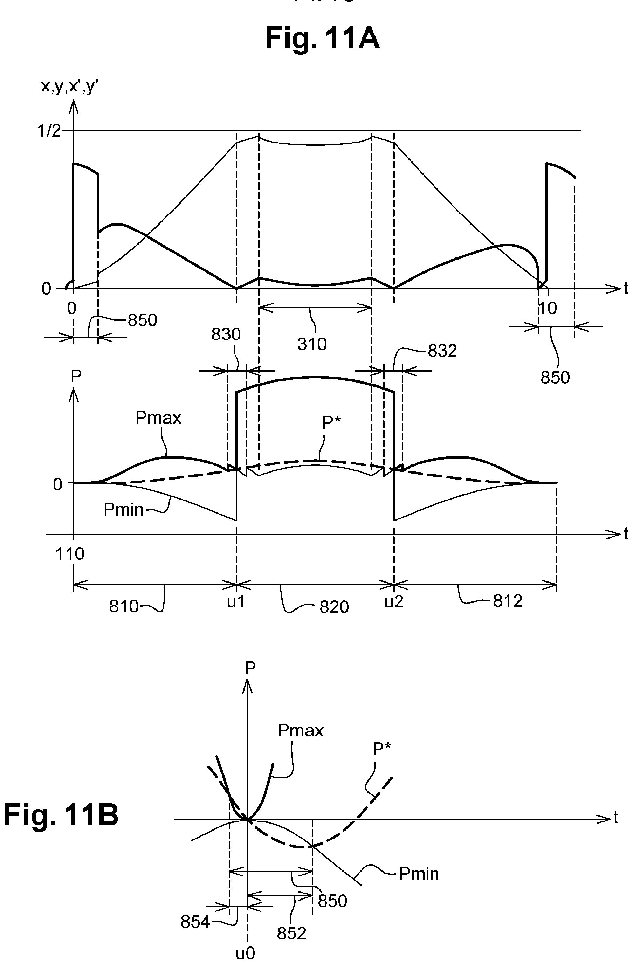

La figure 11A représente, de manière schématique et sous forme de chronogrammes, des allures des paramètres x, y, x, y' et de puissances Pmax, P et Pmin (P) en fonction du temps t. La figure 11B représente, de manière schématique et à une échelle différente, des allures des puissances de la figure 11A autour d'un instant u0.

Plus précisément, les chronogrammes représentés correspondent à une demi-alternance de la tension V1 commençant à l'instant u0. La tension V2 est continue dans l'exemple représenté. Les paramètres de commandes sont représentés entre 0 et 1/2. La fréquence de découpage est constante dans cet exemple.

Les séquences SA et SB décrites en relation avec les figures 4 et 5 sont appliquées aux ponts en H 110 et 120, préférentiellement de la manière décrite en relation avec les figures 6A et 6B pour le premier mode de fonctionnement, et avec les figures 7A et 7B pour le deuxième mode de fonctionnement. Les séquences SA et SB, répétées à une fréquence de découpage plus élevée que celle de la tension alternative V1, évoluent au cours de la demi-alternance en fonction des paramètres x, y et x' et y'.

Selon un troisième aspect, on prévoit que, au cours d'une même demi-alternance de la tension AC aux bornes du pont en H 110, à une période 810, le convertisseur fonctionne selon le deuxième mode de fonctionnement, et, à une période 820, le convertisseur fonctionne selon le premier mode de fonctionnement.

Dans l'exemple représenté, ceci est obtenu par la mise en œuvre du procédé de la figure 10. Les puissances Pmin et Pmax sont définies respectivement par les puissances minimale et maximale pour chaque mode de fonctionnement, à savoir :

- pendant le premier mode de fonctionnement, la puissance Pmax prend la valeur P1H. La puissance Pmin prend la valeur P1L lorsque les conditions pour que les commutations soient de type ZVS ne sont pas complètement remplies, et la valeur P1L$_{zvs}$ lorsque ces conditions sont remplies ; et

- pendant le deuxième mode de fonctionnement, la puissance Pmin prend la valeur P2L. La puissance Pmax prend la valeur P2H lorsque les conditions pour que les commutations soient de type ZVS ne sont pas complètement remplies, et la valeur P2H$_{ZVS}$ lorsque ces conditions sont remplies.

Au cours de la période 810, la consigne P* est inférieure à la valeur P2H. A la fin de la période 810, la consigne P* s'approche de la valeur P2H, puis la consigne P* franchit la valeur P2H, c'est-à-dire passe temporairement par une valeur égale ou supérieure à la puissance P2H. Ceci provoque le passage dans le premier mode de fonctionnement.

Au cours de la période 820, la consigne P* est inférieure à la valeur P2H. A la fin de la période 820, la consigne P* s'approche de la valeur P1L, puis la consigne P* franchit la valeur P1L, c'est-à-dire passe temporairement par une valeur égale ou inférieure à la puissance P1L. Ceci provoque le passage dans le deuxième mode de fonctionnement. Le deuxième mode de fonctionnement se poursuit pendant une période 812.

Dans l'exemple représenté, ces passages entre modes de fonctionnements sont obtenus par le procédé de la figure 10. Le passage du premier mode de fonctionnement au deuxième mode de fonctionnement résulte de la comparaison entre la consigne P* et la valeur P1L effectuée à l'étape 720. Le passage du deuxième mode de fonctionnement au premier mode de fonctionnement résulte de la comparaison entre la consigne P* et la valeur P2H effectuée à l'étape 750. Ceci permet d'obtenir une égalité entre la consigne P* et la puissance modélisée P pour n'importe quelle valeur de la consigne P* entre la valeur de puissance minimale transférable P2L du deuxième mode de fonctionnement et la valeur de puissance maximale transférable P1H du premier mode de fonctionnement.

Dans d'autres exemples, on peut utiliser, à la place du procédé de la figure 10, tout procédé permettant d'obtenir, dans la même demi-alternance de la tension AC, des périodes pendant lesquelles le premier mode de fonctionnement est mis en œuvre, et des périodes pendant lesquelles le deuxième mode de fonctionnement est mis en œuvre, en sorte que la consigne P* reste égale à la puissance modélisée P pour n'importe quelle valeur de la consigne P* entre P2L et P1H.

On peut prévoir, comme dans l'exemple de la figure 10, que la période 810 se termine, de préférence, lorsque la consigne P* franchit la valeur maximale P2H, et la période 820 se termine, de préférence, lorsque la consigne P* franchit la valeur minimale P2L. Cependant, ceci n'est pas limitatif, et on peut prévoir que les passages d'une période à l'autre soient déclenchés de toute autre manière permettant d'assurer que la consigne P* soit, dans le premier mode de fonctionnement, entre les valeurs P1L et P1H, et, dans le deuxième mode de fonctionnement, entre les valeurs P2L et P2H.

En particulier, dans des modes de réalisation selon lesquels la fréquence de découpage est variable au cours de la demi-alternance, on peut prévoir que l'instant u1 de passage du deuxième mode de fonctionnement au premier mode de fonctionnement et/ou l'instant u2 de passage du premier mode de fonctionnement au deuxième mode de fonctionnement, soit celui auquel la fréquence de découpage devient égale, respectivement, à la fréquence minimum et/ou au maximum de la plage de valeurs de fréquences définie ci-dessus en relation avec la figure 8.

Dans l'exemple où la valeur de fréquence de découpage f est, pendant la période 820 de fonctionnement selon le premier mode, solution de l'équation (26) (entre P*, P1L et P1H, les valeurs P1H et P1L étant fournies en fonction de la fréquence f par les relations (17) et (18)), l'instant u2 peut correspondre à celui auquel la fréquence f atteint la fréquence maximum. Pour cela, on remplace, dans les relations (17) et (18), la fréquence f par la fréquence maximum. Les tensions V1, V2 peuvent être modélisées en fonction du temps t, par exemple par une tension V1 sinusoïdale et une tension V2 constante. La consigne P* peut également être modélisée en fonction du temps t, par exemple de la manière décrite ci-dessus en relation avec la figure 3. Les relations (17) et (18) fournissent alors les valeurs P1H et P1L en fonction du temps t. On obtient l'équation (28) suivante :

[Math 28]

$$P^*(t) = \frac{1}{2}(P1L(t) + P1H(t)) \tag{28}$$

correspondant à l'équation (26) dans laquelle le temps t est l'inconnue. On donne à l'instant u1 la valeur du temps t solution de l'équation (28).

L'instant u2 peut être calculé de manière similaire dans l'exemple où la valeur de fréquence de découpage, pendant la période 820 de fonctionnement selon le premier mode, est solution de l'équation (27) (entre P*, P2L et P2H). On met en œuvre le calcul décrit ci-dessus, en remplaçant l'équation (26), les relations (17) et (18), les valeurs P1L et P1H, et la fréquence maximum de la plage, par, respectivement, l'équation (27), les relations (24) et (25), les valeurs P2L et P2H, et la fréquence minimum de la plage.

Dans l'exemple représenté où le procédé de la figure 10 est mis en œuvre, à une période 830 située à cheval sur les périodes 810 et 820, et à une période 832 située à cheval sur les périodes 820 et 812, les calculs des instants de commutation sont effectués indépendamment du seuil de courant $I_{ZVS}$. Ceci résulte des étapes 716 et 746 (figure 10).

Dans d'autres exemples, on peut remplacer le procédé de la figure 10 par tout procédé adapté à effectuer, pendant la période 830 et/ou 832, les calculs des instants de commutation indépendamment du seuil de courant $I_{ZVS}$. Le fait de prévoir de telles périodes permet d'obtenir une égalité entre la consigne P* et la puissance P modélisée, y compris lorsque la consigne P* est comprise entre les valeurs $P2H_{ZVS}$ et P2H et/ou entre les valeurs P1L et $P1L_{ZVS}$.

Dans l'exemple représenté, en dehors des périodes 830 et 832, c'est-à-dire dans des parties centrales des périodes 810, 820 et 812, les calculs des instants de commutation sont de sorte que la valeur modélisée de courant dans le transformateur aux instants des commutations soit supérieure au seuil de courant $I_{ZVS}$, en sorte que les commutations peuvent être de type ZVS.

Dans d'autres exemples, on peut remplacer le procédé de la figure 10 par tout procédé adapté à produire, pendant au moins les parties centrales des périodes 810 et 820, les instants des commutations sur la base d'une valeur modélisée du courant dans le transformateur supérieure au seuil $I_{ZVS}$. On peut alors, avantageusement, obtenir des commutations de type ZVS, en appliquant un temps mort tel que celui décrit en relation avec la figure 9.

Durant une période 310, la valeur de la tension V1 est supérieure à la valeur n*V2. En dehors de cette période, la tension V1 a une valeur inférieure à la valeur n*V2.

Dans l'exemple représenté, la période 310 est entièrement située dans la période 820. Ainsi, lorsque le fonctionnement est selon le deuxième mode, la tension V1 a une valeur inférieure à la valeur n*V2. Dans cet exemple, on met en œuvre, de préférence, l'étape de la figure 7A dans le deuxième mode de fonctionnement.

Dans l'exemple représenté, au cours de la période 820, c'est-à-dire lorsque le fonctionnement est selon le premier mode, on met en œuvre, de préférence, l'étape de la figure 6A en dehors de la période 310 et l'étape de la figure 6B pendant la période 310. Le passage de l'étape de la figure 6A à celle de la figure 6B est effectué lorsque la somme x+y des paramètres x et y (figure 6A) est temporairement égale à 0,5. A ce passage, la durée des états O de la séquence SB s'annule. Il en résulte que la séquence SB devient temporairement identique à la séquence SA, à un déphasage près égal à dφ (figure 6A) entre les deux séquences. Le rapport cyclique de la séquence SB est alors égal à 0,5. La commande du transfert de puissance entre les ponts est ainsi, temporairement, du type commande par décalage de phase (en anglais "phase-shift control") entre les deux séquences SA et SB comprenant chacune deux cycles inverses l'un de l'autre et présentant un rapport cyclique égal à 0,5. Le passage de l'étape de la figure 6B à celle de la figure 6A est effectué de manière similaire.

Dans un autre exemple, la période 820 peut être entièrement située dans la période 310, et des parties de la période 310 peuvent être situées à la fin de la période 810 et/ou au début de la période 812. Il en résulte que l'on met en œuvre l'étape de la figure 6B lorsque le fonctionnement est selon le premier mode. Lorsque le fonctionnement est selon le deuxième mode, l'étape de la figure 7A est mise en œuvre en dehors de la période 310 et l'étape de la figure 7B est mise en œuvre pendant les parties concernées de la période 310.

Aux passages de l'étape de la figure 7A à celle de la figure 7B, et/ou de l'étape de la figure 7B à celle de la figure 7A, la somme x'+y' des paramètres x' et y' (figures 7A et 7B) est temporairement égale à 0,5. De même que pour les passages des étapes des figure 6A et/ou 6B à celles, respectivement, des figures 6B et/ou 6A, il en résulte que la commande des ponts est temporairement de type commande par décalage de phase aux passages des étapes des figure 7A et/ou 7B à celles, respectivement, des figures 7B et/ou 7A.

Dans encore un autre exemple, la tension V1 reste inférieure à la valeur n*V2 pendant la demi-alternance. Il n'y a pas de période 310.

Aux instants u0 marquant les passages entre demi-alternances consécutives de la tension V1, la tension V1 s'annule. Il en résulte que les valeurs Pmin et Pmax passent, en valeur absolue, par une valeur minimale égale à zéro. En conséquence, la consigne P* est, au cours d'une période 850, en dehors de la plage des puissances transférables comprises entre les valeurs Pmin et Pmax. Plus précisément, la période 850 est constituée d'une période 852 suivant l'instant u0, et d'une période 854 précédant l'instant u0.

Pendant la période 852, le deuxième mode de fonctionnement peut être mis en œuvre. La valeur minimale Pmin prend la valeur P2L. La consigne P* est inférieure à la valeur P2L. L'étape 740 (figure 10) est mise en œuvre. La puissance fournie par le convertisseur correspond à la puissance Pmin.

Pendant la période 854, le premier mode de fonctionnement peut être mis en œuvre. Autrement dit, le premier mode de fonctionnement peut être mis en œuvre pendant les deux périodes disjointes 820 et 854 au cours de la même demi-alternance. La valeur minimale Pmax prend la valeur P1H. La consigne P* est supérieure à la valeur P1H. L'étape 710 (figure 10) est mise en œuvre. La puissance fournie par le convertisseur correspond à la puissance Pmax.

En variante, on pourrait mettre en œuvre le deuxième mode de fonctionnement pendant la période 854, autrement dit, la période 812 et la période 810 de l'alternance suivante, non représentée, pourraient constituer une période d'application uniquement du deuxième mode de fonctionnement. Par rapport à cette variante, l'application du premier mode de fonctionnement pendant la période 854 permet de rapprocher la consigne P* de la puissance transférée en pratique par le convertisseur, ce qui permet d'améliorer la fonction PFC remplie par le convertisseur.

On a décrit ci-dessus, en relation avec les figures 11A et 11B, des modes de réalisation selon le troisième aspect, selon lequel les premier et deuxième modes de fonctionnement sont appliqués à deux périodes d'une même demi-alternance.

De préférence, au cours de la mise en œuvre de ce troisième aspect, on calcule les instants de commutation des séquences SA et SB des étapes 6A et 6B, ou 7A et 7B, selon le premier aspect, c'est-à-dire à partir des mêmes valeurs des paramètres, respectivement x et y ou x' et y'. Cependant, à la place du calcul selon le premier aspect, on peut également mettre en œuvre toute étape de calcul permettant de définir les instants de commutation des ponts.

De préférence, au cours de la mise en œuvre de ce troisième aspect, la fréquence de découpage est prédéfinie selon le deuxième aspect. Cependant, la fréquence de découpage peut également être définie en même temps que les instants de commutation des ponts.

En outre, on a décrit ci-dessus des modes de réalisation dans lesquels le premier aspect et/ou le deuxième aspect sont appliqués au cas particulier d'une tension V1 alternative et d'une tension V2 continue. Cependant, dans d'autres modes de réalisation, le premier aspect et/ou le deuxième aspect peuvent être mis en œuvre lorsque la tension V1 est continue et/ou lorsque la tension V2 est alternative.

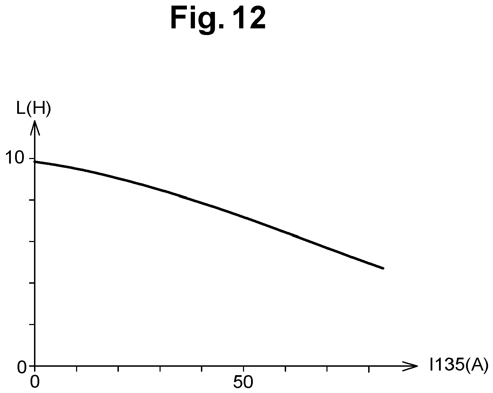

La figure 12 représente, de manière schématique, un exemple d'allure d'une inductance L (en H) en fonction du courant I135 (en A), selon un mode de réalisation.

Selon le présent mode de réalisation, on prévoit que la valeur L de l'inductance de fuite décroisse lorsque le courant I135 dans l'inductance de fuite, c'est-à-dire dans l'enroulement 131 (figure 1) du transformateur 130, augmente en valeur absolue. Autrement dit, la valeur L est relativement élevée lorsque le courant I135 est relativement faible, et relativement faible lorsque le courant I135 est relativement élevé.

A titre d'exemple, l'inductance de fuite 135 est prévue pour que sa valeur soit sensiblement divisée par deux lorsque le courant I135 passe de la valeur nulle du courant I135 à une valeur maximale du courant I135. Dans l'exemple représenté, l'inductance L est proche de 10 H pour la valeur nulle du courant I135, et la valeur maximale du courant I135 est de l'ordre de 80 A. La valeur maximale peut correspondre à une valeur maximale atteinte par le courant I135 lorsque le convertisseur est en fonctionnement, par exemple dans le premier mode de fonctionnement.

Une inductance de fuite dont la valeur décroit ainsi en fonction du courant peut être obtenue, par exemple, en prévoyant dans l'inductance un circuit magnétique configuré pour saturer lorsque le courant augmente, en sorte de provoquer la variation souhaitée de la valeur de l'inductance de fuite en fonction du courant.

En fonctionnement, par exemple au cours d'étapes similaires celles des figures 6A à 6B et 7A à 7D, les variations du courant I135 en fonction du temps t diffèrent de celles représentées dans ces figures par des variations du courant dont l'amplitude augmente lorsque la valeur du courant I135 s'éloigne de zéro.

Selon un mode de réalisation, la fréquence de découpage est choisie préalablement au calcul des instants de commutation. Plus préférentiellement, les instants de commutation sont définis à partir des paramètres x et y et/ou x' et y' décrits en relation avec les figures 6A à 6D et 7A à 7D.

Pour chaque ensemble de valeurs des tensions V1 et V2, on peut alors calculer la puissance modélisée P, moyenne à chaque répétition des séquences de découpage, en fonction des paramètres x et y, à partir d'un modèle du convertisseur. Dans le présent mode de réalisation, le modèle du convertisseur prend en compte les variations ci-dessus de la valeur L de l'inductance de fuite 135 en fonction du courant I135.

Pour cela, à titre d'exemple, on détermine le courant I135 en fonction du temps en utilisant les variations de la tension V135, par exemple identiques à celles décrites en figures 6A à 6D et 7A à 7D, et sur la base de valeurs des paramètres x et/ou y, ou x' et/ou y'. Les valeurs modélisées du courant en fonction du temps peuvent être calculées numériquement. Une valeur modélisée de puissance instantanée peut être déduite numériquement des valeurs de la tension V135 et du courant I135. La puissance modélisée P correspond à la moyenne, sur une séquence de commutations, de la puissance instantanée. Il en résulte la valeur modélisée P de la puissance en fonction des paramètres x et/ou y ou x' et/ou y'. La fréquence de découpage peut être calculée préalablement, et/ou être solution d'une équation du type de l'équation (26) ou (27).

Pour chacun des premier et deuxième modes de fonctionnement, l'allure de la puissance modélisée P est similaire à celle représentée à la figure 8 pour ce mode de fonctionnement. On obtient les paramètres x et/ou y, ou x' et/ou y', comme solutions de l'équation P*=P. Pour cela, en l'absence de relation algébrique fournissant la puissance modélisée P en fonction des paramètres x et/ou y, ou x' et/ou y', on peut mettre en œuvre tout procédé de recherche numérique d'une solution à une équation, par exemple par itérations successives.

Les instants de commutation des séquences sont ensuite calculés de la manière décrite en relation avec les figures 6A à 6D et 7A à 7D, à partir des paramètres x et/ou y, ou x' et/ou y' obtenus. Il en résulte que la consigne P* correspond à la valeur modélisée P.

Dans le deuxième mode de fonctionnement, du fait que la valeur L est relativement élevée lorsque le courant I135 est relativement faible, on obtient, pour une même valeur du courant I135, une énergie stockée plus importante de l'inductance de fuite que si la valeur L est constante. Ceci permet de réduire le seuil de courant $I_{ZVS}$ (au-delà duquel les conditions pour que les commutations soient de type ZVS sont assurées). On réduit ainsi la durée des périodes 830 et 832 (figure 11A). Il en résulte, avantageusement, une réduction des pertes d'énergie dans le convertisseur en moyenne au cours de chaque demi-alternance de la tension V1.

Egalement dans le deuxième mode de fonctionnement, du fait que la valeur L est relativement élevée lorsque le courant I135 est relativement faible, la puissance transférée par le convertisseur est plus faible pour une fréquence donnée que si la valeur L est constante. Il en résulte une amélioration du fonctionnement du convertisseur pour les puissances relativement faibles. En particulier, la valeur Pmin (figure 11A) est réduite, ce qui permet de réduire la durée de la période 852 (figure 11A), et ainsi d'améliorer la fonction PFC du convertisseur.

Dans le premier mode de fonctionnement, du fait que la valeur L est relativement élevée lorsque le courant I135 est relativement faible, on obtient, pour une même valeur de l'énergie stockée dans l'inductance de fuite, une valeur plus faible du courant I135 que si la valeur L est constante. Ceci permet de réduire le seuil de courant $I_{ZVS}$ et donc de réduire la durée des périodes 830 et 832 (figure 11A). Il en résulte, avantageusement, une réduction des pertes d'énergie dans le convertisseur en moyenne au cours de chaque demi-alternance de la tension V1.

Egalement dans le premier mode de fonctionnement, du fait que la valeur L est relativement élevée lorsque le courant I135 est relativement faible, la puissance transférée par le convertisseur est plus élevée pour une fréquence donnée que si la valeur L est constante. Il en résulte une amélioration du fonctionnement du convertisseur pour les puissances relativement élevées. En particulier, la valeur Pmax (figure 11A) est augmentée, ce qui permet de réduire la durée de la période 854 (figure 11A), et ainsi d'améliorer la fonction PFC du convertisseur.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Procédé de commande d'un convertisseur comprenant deux ponts en H (110, 120) reliés par un transformateur (130), dans lequel :

   - des répétitions de deux séquences (SA, SB) de commutations entre plusieurs états (P, O, N) sont appliquées respectivement aux deux ponts ;
   - l'un des états (P, N) d'une première (SB) des deux séquences correspond à un sens donné d'application d'une tension au transformateur par le pont auquel la première des deux séquences est appliquée ; et
   - la première des deux séquences évolue au cours d'une même demi-alternance d'une tension AC (V1) aux bornes de l'un des ponts (110), en sorte que :

      pendant au moins une première période de temps (810, 812), des commutations d'entrée et sortie dudit l'un des états se produisent à un même état d'une deuxième (SA) des deux séquences ; et
      pendant au moins une deuxième période de temps (820, 854), des commutations d'entrée et sortie dudit l'un des états se produisent à des états différents de la deuxième des deux séquences.

2. Procédé selon la revendication 1, dans lequel :

   - les deux séquences (SA, SB) comprennent chacune deux cycles (SA1, SA2, SB1, SB2) de commutation respectifs de deux branches (111, 112, 121, 122) du pont auquel la séquence est appliquée ;
   - les cycles d'une première (SB) des deux séquences sont déphasés l'un par rapport à l'autre ;
   - les cycles d'une deuxième (SA) des deux séquences sont inverses l'un de l'autre ; et
   - de préférence, les cycles de la première (SB) et/ou deuxième (SA) des deux séquences ont un rapport cyclique sensiblement égal à 0,5.

3. Procédé selon la revendication 1 ou 2, dans lequel les commutations des séquences ont lieu à des instants (tA1, tA2, tB1, tB2, tB3, tB4) résultant de calculs basés sur une égalité entre :

   - une puissance à transférer entre les ponts (110, 120) par le convertisseur (100), représentée par une consigne (P*) ; et
   - une puissance calculée à partir d'un modèle du convertisseur et à partir de valeurs des tensions (V1, V2) aux bornes des ponts.

4. Procédé selon la revendication 3, dans lequel chacune desdites commutations comprend un temps mort (DT), et lesdits calculs sont basés, pendant au moins des parties centrales des première et deuxième périodes (810, 812, 820), sur une valeur (i0) de courant dans le transformateur à l'un des instants de commutation souhaitée supérieure à un seuil de courant ($I_{ZVS}$), en sorte que les commutations soient de type ZVS pendant lesdites parties centrales.

5. Procédé selon la revendication 3 ou 4, dans lequel la consigne (P*) est calculée en fonction d'une valeur ($V_{V1}$) de tension reçue par l'un des ponts (110) et/ou d'une valeur ($V_{V2}$) de tension à fournir par l'autre des ponts (120).

6. Procédé selon la revendication 5, dans lequel la tension reçue (V1) est alternative et la consigne (P*) est calculée en sorte que le convertisseur ait un fonctionnement de type PFC.

7. Procédé selon l'une quelconque des revendications 3 à 6, dans lequel lesdits calculs sont en outre basés sur une égalité souhaitée entre valeurs (i0) d'un courant (I135) dans le transformateur (130) à l'un des instants de commutation de l'une des deux séquences et à l'un des instants de commutation de l'autre des deux séquences.

8. Procédé selon l'une quelconque des revendications 3 à 7, dans lequel, pour chacun desdits calculs, une fréquence (f) commune auxdites répétitions est choisie préalablement audit calcul.

9. Procédé selon l'une quelconque des revendications 3 à 8, dans lequel :

- au cours de la première période (810, 812), la consigne (P*) est inférieure à une valeur maximale de puissance transférable (P2H) estimée en fonction d'une valeur représentative (x', y') d'une première durée entre instants de commutation des deux séquences (SA, SB) ;
- au cours de la deuxième période (820), la consigne (P*) est supérieure à une valeur minimale de puissance transférable (P1L) estimée en fonction d'une valeur représentative (x, y) d'une deuxième durée entre instants de commutation des deux séquences (SA, SB) ; et
- des passages de la première période à la deuxième période et/ou de la deuxième période à la première période sont déclenchés par le franchissement par la consigne, respectivement, de la valeur maximale et/ou de la valeur minimale.

10. Procédé selon la revendication 9, dans lequel, pendant au moins une troisième période (830, 832) à cheval sur les première et deuxième périodes (810, 820, 812) et située en dehors desdites parties centrales, lesdits calculs sont indépendants du seuil de courant ($I_{ZVS}$).

11. Procédé selon l'une quelconque des revendications 1 à 10, dans lequel les deux séquences sont générées à partir d'une même valeur (x, x') représentative d'un écart entre des instants de commutation des deux séquences :

   - pour une valeur d'un rapport entre tensions (V1, V2) aux bornes des deux ponts (110, 120) supérieure à un rapport de transformation (n) du transformateur (130) ; et
   - pour une valeur du rapport entre les tensions inférieure au rapport de transformation.

12. Procédé selon l'une quelconque des revendications 1 à 11, dans lequel les ponts sont commutés respectivement :

   - selon les première (SB) et deuxième (SA) des deux séquences lorsque la valeur d'un rapport entre tensions (V1, V2) respectives des ponts est supérieure à un rapport de transformation (n) du transformateur (130) ; et
   - selon les deuxième (SA) et première (SB) des deux séquences lorsque la valeur du rapport entre tensions respectives des ponts est supérieure au rapport de transformation.

13. Dispositif (180) configuré pour mettre en œuvre un procédé selon l'une quelconque des revendications 1 à 12.

14. Convertisseur (100) comprenant un dispositif selon la revendication 13.

15. Convertisseur selon la revendication 14, dans lequel le transformateur (130) comprend une inductance de fuite (135) dont la valeur décroit lorsqu'un courant (I135) dans le transformateur augmente en valeur absolue.

# Fig. 1

# Fig. 2

# Fig. 3

# Fig. 4

SA1

H

L

SA2

H

L

SA

P

0

N

tAS

tA1　　tA2　　tA1　　tA2

tAS

# Fig. 5

510

520

510

SB1

522

H

L

520

524

SB2

522

524

H

L

SB

P

0

N

tBS

tB2　　tB3

tBS

tB2　　tB3

tB1　　　tB4　　tB1　　　tB4

# Fig. 6A

# Fig. 6B

# Fig. 6C

Fig. 6D

**Fig. 6D**

# Fig. 7A

# Fig. 7B

# Fig. 7C

# Fig. 7D

# Fig. 8

# Fig. 9

# Fig. 10

700

702

MODE 1

704 — SET ZVS

706 — CALC P1H & P1L zvs

708 — P*>P1H ? → Y → 710 x=x (P1H)

N

712 — P*≥P1L zvs ? → Y → x=x (P*) 714

N

716 — UNSET ZVS

718 — CALC P1L

720 — P*>P1L ? → Y → 722 x=x (P*)

N

732 — MODE 2

734 — SET ZVS

736 — CALC P2L & P2H zvs

738 — P*<P2L ? → Y → 740 x=x (P2L)

N

742 — P*≤P2H zvs ? → Y → x=x (P*) 744

N

746 — UNSET ZVS

748 — CALC P2H

750 — P*<P2H ? → Y → 752 x=x (P*)

N

## Fig. 11A

## Fig. 11B

# Fig. 12

Europäisches
Patentamt

European
Patent Office

Office européen
des brevets

## RAPPORT DE RECHERCHE EUROPEENNE

Numéro de la demande

EP 21 17 3699

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SAHA JAYDEEP ET AL: "A Review on Bidirectional Matrix-Based AC-DC Conversion for Modular Solid-State-Transformers", 2019 IEEE 4TH INTERNATIONAL FUTURE ENERGY ELECTRONICS CONFERENCE (IFEEC), IEEE, 25 novembre 2019 (2019-11-25), pages 1-8, XP033727948, DOI: 10.1109/IFEEC47410.2019.9015013 | 1,13-15 | INV. H02M1/42 H02M7/219 H02M1/00 |
| Y | * figures 3-6 * <br> * page 2 - page 5 * <br> ----- | 2-12 | |
| Y | JAUCH F ET AL: "Single-phase single-stage bidirectional isolated ZVS AC-DC converter with PFC", POWER ELECTRONICS AND MOTION CONTROL CONFERENCE (EPE/PEMC), 2012 15TH INTERNATIONAL, IEEE, 4 septembre 2012 (2012-09-04), pages LS5d.1-1, XP032312081, DOI: 10.1109/EPEPEMC.2012.6397479 ISBN: 978-1-4673-1970-6 | 2-12 | |
| A | * figure 1 * <br> * figures 3-4 * <br> * figure 6 * <br> * page 1 - page 5 * <br> ----- | 1,13-15 | DOMAINES TECHNIQUES RECHERCHES (IPC) <br><br> H02M |
| Y | US 2011/249472 A1 (JAIN AMIT KUMAR [US] ET AL) 13 octobre 2011 (2011-10-13) | 11,12 | |
| A | * figure 2 * <br> * figures 3A-3D * <br> * figure 4A * <br> * figure 10 * <br> * alinéa [0025] - alinéa [0036] * <br> * alinéa [0055] - alinéa [0056] * <br> ----- <br> -/-- | 1-10, 13-15 | |

Le présent rapport a été établi pour toutes les revendications

| Lieu de la recherche | Date d'achèvement de la recherche | Examinateur |
|---|---|---|
| La Haye | 8 septembre 2021 | Riehl, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 21 17 3699

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CHEN TIANXIANG ET AL: "A single-stage bidirectional dual-active-bridge AC-DC converter based on enhancement mode GaN power transistor", 2018 IEEE APPLIED POWER ELECTRONICS CONFERENCE AND EXPOSITION (APEC), IEEE, 4 mars 2018 (2018-03-04), pages 723-728, XP033347327, DOI: 10.1109/APEC.2018.8341092 * figures 1-3 * * pages 1-4 * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 8 septembre 2021 | Riehl, Philippe |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 17 3699

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-09-2021

| Document brevet cité<br>au rapport de recherche | Date de<br>publication | Membre(s) de la<br>famille de brevet(s) | Date de<br>publication |
|---|---|---|---|
| US 2011249472 A1 | 13-10-2011 | AUCUN | |

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 20110249472 A